(19) **Europäisches Patentamt / European Patent Office / Office européen des brevets**

(11) **EP 4 783 583 A1**

(12) **EUROPEAN PATENT APPLICATION**
published in accordance with Art. 153(4) EPC

(43) Date of publication:
**29.07.2026 Bulletin 2026/31**

(21) Application number: **24874001.1**

(22) Date of filing: **19.06.2024**

(51) International Patent Classification (IPC):
**H04N 19/42** *(2014.01)*

(52) Cooperative Patent Classification (CPC):
**H04N 9/64; H04N 19/186; H04N 19/40; H04N 19/42**

(86) International application number:
**PCT/CN2024/100182**

(87) International publication number:
**WO 2025/073182 (10.04.2025 Gazette 2025/15)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 07.10.2023 CN 202311289650
30.01.2024 CN 202410139746

(71) Applicant: **HUAWEI TECHNOLOGIES CO., LTD.**
**Shenzhen 518129 (CN)**

(72) Inventors:
• **WANG, Yichuan**
**Shenzhen, Guangdong 518129 (CN)**
• **YOU, Hongjie**
**Shenzhen, Guangdong 518129 (CN)**
• **XU, Weiwei**
**Shenzhen, Guangdong 518129 (CN)**
• **YU, Quanhe**
**Shenzhen, Guangdong 518129 (CN)**

(74) Representative: **Eisenführ Speiser**
**Patentanwälte Rechtsanwälte PartGmbB**
**Johannes-Brahms-Platz 1**
**20355 Hamburg (DE)**

(54) **DATA PROCESSING METHOD AND APPARATUS, AND SYSTEM**

(57) A data processing method, an apparatus, and a system are disclosed, and relate to the field of video or image processing technologies. An encoder obtains baseline data, gain map data, and metadata of a first image, and encodes the baseline data, the gain map data, and the metadata to obtain a bitstream. A decoder receives and parses the bitstream to obtain the baseline data, the gain map data, and the metadata of the first image. The decoder determines and converts target data (that is, the baseline data, or the gain map data, or an image obtained by combining the baseline data and the gain map data) based on conversion information carried in the metadata. In this way, the decoder determines and converts the target data based on the conversion information carried in the metadata, so that conversion performed on the target data matches the target data. The decoder converts the target data based on the conversion information matching the target data, so that a dynamic range of an image obtained through conversion can better adapt to a dynamic range supported by a display device, thereby improving display effect.

FIG. 14

## Description

This application claims priorities to Chinese Patent Application No. 202311289650.8, filed with the China National Intellectual Property Administration on October 7, 2023 and entitled "CODING METHOD AND RELATED DEVICE", and to Chinese Patent Application No. 202410139746.4, filed with the China National Intellectual Property Administration on January 30, 2024 and entitled "DATA PROCESSING METHOD, APPARATUS, AND SYSTEM", both of which are incorporated herein by reference in their entireties.

## TECHNICAL FIELD

This application relates to the field of video or image processing technologies, and in particular, to a data processing method, an apparatus, and a system.

## BACKGROUND

In the video or image processing field, a dynamic range refers to a ratio of a maximum grayscale value (or referred to as a luminance value) of a pixel of an image to a minimum grayscale value of the pixel of the image.

After capturing a video or an image, an electronic device may display the video or the image on the electronic device, or transmit the video or the image to another display device for display on the another display device. Different display devices can display different dynamic ranges of pixels. When the video or the image is displayed on the display device, a dynamic range of the captured video or image may be different from a dynamic range supported by the display device. Therefore, the dynamic range of the captured video or image needs to be adjusted to the dynamic range supported by the display device, so that the video or the image can be smoothly displayed on the display device.

The electronic device may convert the dynamic range of the video or the image based on the dynamic range supported by the display device, so that a converted dynamic range of the video or image matches the dynamic range supported by the display device. The electronic device converts the dynamic range of the video or the image based on the dynamic range supported by the display device, which affects coding efficiency.

## SUMMARY

This application provides a data processing method, an apparatus, and a system, to resolve a problem that coding efficiency is affected because an electronic device converts a dynamic range of a video or an image based on a dynamic range supported by a display device.

According to a first aspect, an embodiment of this application provides a data processing method. The method is executed by a decoder. The decoder determines target data based on conversion information carried in metadata, where the metadata is metadata of a first image. The target data includes at least one of baseline data of the first image and gain map data of the first image. For example, the target data is the baseline data of the first image. For another example, the target data is the gain map data of the first image. For still another example, the target data is the baseline data of the first image and the gain map data of the first image. Alternatively, the target data includes a second image. The second image is obtained based on the baseline data of the first image and the gain map data of the first image. The decoder converts the target data based on the conversion information.

In this application, the decoder determines and converts the target data based on the conversion information carried in the metadata, so that conversion performed on the target data matches the target data. The decoder converts the target data based on the conversion information matching the target data, so that a dynamic range of the image obtained through conversion can better adapt to a dynamic range supported by a display device, thereby improving display effect.

In a possible implementation, the metadata may be preset, or may be carried in a bitstream. When the metadata is carried in the bitstream, the decoder obtains the metadata from the bitstream. In this way, the bitstream carries the metadata of the first image, so that the decoder can quickly and accurately obtain the metadata, thereby improving conversion efficiency.

In another possible implementation, the conversion information includes conversion location information and conversion scheme information. The conversion location information indicates a location at which the conversion occurs, the conversion scheme information indicates a conversion scheme used when the target data is converted, and the conversion occurs before or after the second image is obtained. In this way, the decoder may determine the to-be-performed conversion scheme based on the conversion location information, so that the conversion scheme matching the target data can be quickly obtained, thereby improving decoding efficiency.

In another possible implementation, when the conversion occurs before the second image is obtained, the conversion information further includes conversion object information, the conversion object information indicates a conversion object on which the conversion scheme needs to be performed, and the conversion object includes: the baseline data; or the gain map data; or the baseline data and the gain map data. In this way, the decoder determines, based on the conversion object information, the conversion scheme that matches the conversion object information, thereby improving conversion effect.

In another possible implementation, when the conversion object includes the baseline data, the conversion scheme information includes a baseline data conversion scheme, and the baseline data conversion scheme indicates to perform at least one of the following conversion on the baseline data: color gamut conversion; chrominance format conversion; color compensation; or color mode conversion. In this way, the decoder performs at least one of the color gamut conversion, the chrominance format conversion, the color compensation, or the color mode conversion on the baseline data according to the baseline data conversion scheme, so that the converted image can better adapt to the display device, thereby improving the display effect.

In another possible implementation, the baseline data conversion scheme further indicates a conversion parameter used when the baseline data is converted.

In another possible implementation, the conversion parameter includes at least one of a compensation matrix, a conversion matrix, a conversion function, and a compensation value. In this way, the decoder can quickly and accurately match the conversion parameter corresponding to a conversion process, and convert the baseline data by using the conversion parameter corresponding to the conversion process, thereby improving the conversion effect.

In another possible implementation, when the conversion object includes the gain map data, the conversion scheme information includes a gain map data conversion scheme. The gain map data conversion scheme indicates to perform at least one of color mode conversion, chrominance format conversion, or channel conversion on the gain map data. The channel conversion is used to restore a channel of the gain map data to an original channel. In this way, the decoder performs at least one of the color mode conversion, the chrominance format conversion, or the channel conversion on the baseline data according to the baseline data conversion scheme, so that the converted image can better adapt to the display device, thereby improving the display effect.

In another possible implementation, the gain map data conversion scheme further indicates a conversion parameter used when the gain map data is converted.

In another possible implementation, the conversion parameter includes at least one of a conversion matrix, a conversion function, and a channel conversion function.

In a possible case, the conversion information includes channel combination information, and the channel combination information indicates a combination scheme of a channel corresponding to a color mode of the baseline data and a channel corresponding to a color mode of the gain map data.

In another possible implementation, the color modes of the baseline data and the gain map data may include a plurality of different combination manners. The following provides several possible manners.

Manner 1: The color mode of at least one of the baseline data and the gain map data is a red green blue RGB mode or a grayscale mode.

Manner 2: The color mode of the baseline data is the RGB mode, and the color mode of the gain map data is any one of a YUV mode, a Lab mode, an HSV mode, a YCbCr mode, an ICtCp mode, and the grayscale mode.

Manner 3: The color mode of the baseline data is any one of the YUV mode, the Lab mode, the HSV mode, the YCbCr mode, the ICtCp mode, and the grayscale mode, and the color mode of the gain map data is the RGB mode.

Manner 4: The color mode of the baseline data and the color mode of the gain map data are both any one of the YUV mode, the Lab mode, the HSV mode, the YCbCr mode, the ICtCp mode, and the grayscale mode.

In a possible case, a manner, indicated by the channel combination information, of combining a channel of the baseline data and the channel of the gain map data varies with color modes of the baseline data and the gain map data. The following provides several possible manners.

Manner 1: When the color modes of the baseline data and the gain map data are both the RGB mode, the channel combination information indicates that an R channel of the baseline data is combined with an R channel of the gain map data, a G channel of the baseline data is combined with a G channel of the gain map data, and a B channel of the baseline data is combined with a B channel of the gain map data.

Manner 2: When the color mode of the baseline data is the RGB mode and the color mode of the gain map data is the grayscale mode, the channel combination information indicates that the R channel of the baseline data is combined with a grayscale value of the gain map data, the G channel of the baseline data is combined with the grayscale value of the gain map data, and the B channel of the baseline data is combined with the grayscale value of the gain map data.

Manner 3: When the color mode of the baseline data is the grayscale mode and the color mode of the gain map data is the RGB mode, the channel combination information indicates that the R channel of the gain map data is combined with a grayscale value of the baseline data, the G channel of the gain map data is combined with the grayscale value of the baseline data, and the B channel of the gain map data is combined with the grayscale value of the baseline data.

Manner 4: When the color modes of the baseline data and the gain map data are both the grayscale mode, the channel combination information indicates that the grayscale value of the baseline data is combined with the grayscale value of the gain map data.

Manner 5: When the color mode of the baseline data and the color mode of the gain map data are both any one of the YUV mode, the Lab mode, the HSV mode, the YCbCr mode, the ICtCp mode, and the grayscale mode, the channel combination information indicates that a luminance channel of the baseline data is combined with a luminance channel of the gain map data.

Manner 6: When the color modes of the baseline data and the gain map data are both any one of the YUV mode, the Lab mode, the HSV mode, the YCbCr mode, and the ICtCp mode, the channel combination information indicates that a luminance channel of the baseline data is combined with a luminance channel of the gain map data.

Manner 7: When the color mode of the baseline data is the grayscale mode, and the color mode of the gain map data is any one of the YUV mode, the Lab mode, the HSV mode, the YCbCr mode, and the ICtCp mode, the channel combination information indicates that the channel of the baseline data is combined with a luminance channel of the gain map data.

Manner 8: When the color mode of the baseline data is any one of the YUV mode, the Lab mode, the HSV mode, the YCbCr mode, and the ICtCp mode, and the color mode of the gain map data is the grayscale mode, the channel combination information indicates that the luminance channel of the baseline data is combined with the channel of the gain map data.

In this way, the decoder combines the channels of the baseline data and the gain map data by using a channel combination solution that matches the color modes of the baseline data and the gain map data, thereby improving display effect of an image obtained through combination.

In another possible implementation, a manner of combining the channels may include but is not limited to: addition, multiplication, and the like.

In another possible implementation, the color mode conversion includes: converting a color mode of the baseline data, so that a converted color mode of the baseline data is the same as a color mode of the gain map data; or converting the color mode of the gain map data, so that a converted color mode of the gain map data is the same as the color mode of the baseline data.

In another possible implementation, when the conversion occurs after the second image is obtained, the conversion scheme information includes at least one of color gamut conversion, chrominance format conversion, color compensation, or color mode conversion.

In another possible implementation, the conversion scheme information further includes a conversion parameter. The conversion parameter includes at least one of a compensation matrix, a conversion matrix, a conversion function, and a compensation value.

In another possible implementation, the conversion information includes at least one or more of Manner 1 to Manner 3.

Manner 1: color mode information of the baseline data of the first image.

Manner 2: color mode information of the gain map data of the first image.

Manner 3: color mode information that is to be transformed and processed and that corresponds to the baseline data of the first image and the gain map data of the first image.

In another possible implementation, when an image color space model of the baseline data is a first color mode, a color space model used when the baseline data and the gain map data are combined for processing is a second color mode, and the first color mode is different from the second color mode, the color mode information to be transformed and processed includes a color mode conversion manner. In this way, the decoder converts the image color space model of the baseline data and/or an image color space model of the gain map data, so that a converted image color space model of the baseline data or the gain map data matches the color space model used when the baseline data and the gain map data are combined for processing, and the baseline data and the gain map data can be effectively combined subsequently, thereby improving the display effect.

In another possible implementation, the first color mode and the second color mode are one of the following: RGB, YUV, YCbCr, Lab, HSV, and ICtCp.

In another possible implementation, the conversion information includes at least one or more of Manner 1 to Manner 3.

Manner 1: chrominance format information of the baseline data of the first image.

Manner 2: chrominance format information of the gain map data of the first image.

Manner 3: chrominance format information that is to be transformed and processed and that corresponds to the baseline data of the first image and the gain map data of the first image.

In another possible implementation, when the chrominance format information of the baseline data of the first image is first chrominance format information, chrominance format information used when the baseline data and the gain map data are combined for processing is second chrominance format information, and the first chrominance format information is different from the second chrominance format information, the chrominance format information that is to be transformed and processed includes chrominance format conversion information. In this way, the decoder converts a chrominance format of the baseline data and/or a chrominance format of the gain map data, so that a converted chrominance format of the baseline data or the gain map data matches a chrominance format used when the baseline data and the gain map data are combined for processing, and the baseline data and the gain map data can be effectively combined subsequently, thereby improving the display effect.

In another possible implementation, the first chrominance format information and the second chrominance format information are one of the following: RGB, grayscale, YUV4:4:4, YUV4:2:2, and YUV4:2:0.

In another possible implementation, the first image and the second image are HDR or SDR images.

According to a second aspect, an embodiment of this application provides an encoding method. The method is executed by an encoder. The encoder determines baseline data of a first image, gain map data of the first image, and metadata of the first image based on the obtained first image, where the metadata carries conversion information. The encoder encodes the baseline data, the gain map data, and the metadata to obtain a bitstream.

Compared with the encoder directly encoding the first image to obtain the bitstream, in this application, the encoder obtains the baseline data, the gain map data, and the metadata of the first image based on the first image, and encodes the baseline data, the gain map data, and the metadata to obtain the bitstream. In this way, the bitstream obtained through encoding includes more information of the first image, and this provides assurance for obtaining a better-quality image through decoding.

In a possible implementation, the conversion information includes conversion location information and conversion scheme information. The conversion location information indicates a location at which conversion occurs. The conversion scheme information indicates a conversion scheme used when target data is converted. The conversion occurs before or after a second image is obtained. For related content of the conversion information, the conversion location information, the conversion scheme information, and the conversion scheme, refer to the related content in the first aspect. Details are not described herein again.

According to a third aspect, an embodiment of this application provides a signal processing method. The method includes: obtaining first baseline data, first gain map data, and first metadata, where the first baseline data is baseline data of a first image, the first metadata is metadata of the first image, and the first gain map data is metadata of the first image; determining target data based on conversion information carried in the first metadata, where the target data is the first baseline data and/or the first gain map data; or the target data is a second image, and the second image is an image determined based on the first baseline data and the first gain map data; and converting the target data based on the conversion information, where the first metadata may be preset or carried in a bitstream.

In a possible implementation, the first image and the second image are HDR or SDR images.

In a possible implementation, the conversion information is conversion indication information, and the conversion indication information includes conversion location information. When the conversion location is before determining the second image , the conversion indication information further includes conversion object information. The conversion object information indicates target data on which a conversion scheme needs to be performed, and the target data includes: the first baseline data, the first gain map data, or the first baseline data and the first gain map data.

In a possible implementation, when the target data includes the first baseline data, conversion scheme information includes a baseline data conversion scheme. The baseline data conversion scheme indicates that at least one of the following conversion is performed on the first baseline data:

color gamut conversion;
color compensation; or
color space conversion.

In a possible implementation, the baseline data conversion scheme further indicates a conversion parameter used when the first baseline data is converted.

In a possible implementation, when the baseline data conversion scheme indicates that the color compensation is performed on the first baseline data, the conversion parameter includes any one of the following parameters:

a color compensation matrix;
a conversion function; or
a compensation value and a compensation method.

In a possible implementation, the conversion information is conversion indication information. The conversion indication information includes conversion scheme information. When the target data includes the first gain map data, the conversion scheme information includes a gain map data conversion scheme. The gain map data conversion scheme indicates that at least one of the following conversion is performed on the first gain map data:

color space conversion; and

channel conversion, where the channel conversion is used to restore a channel of the first gain map data to an original channel.

In a possible implementation, the gain map data conversion scheme further indicates a conversion parameter used when the first gain map data is converted.

In a possible implementation, when the target data is the second image, the conversion scheme information includes an image conversion scheme, and the image conversion scheme indicates to perform at least one of the following conversion on the second image:

color gamut conversion; or
color compensation.

According to a fourth aspect, an embodiment of this application provides an encoding method. The method includes: determining first baseline data, first gain map data, and first metadata based on an obtained first image, where the first metadata carries conversion information ; and encoding the first baseline data, the first gain map data, and the first metadata to obtain a bitstream.

In a possible implementation, the conversion information is conversion indication information, the conversion indication information includes conversion location information and conversion scheme information, the conversion location information indicates a location at which a conversion scheme occurs, and the conversion scheme information indicates the conversion scheme. The first metadata may be preset or carried in the bitstream.

In a possible implementation, the location at which the conversion occurs is before or after a new HDR image is synthesized based on the received bitstream.

In a possible implementation, when the conversion occurs before the new HDR image is synthesized, the conversion indication information further includes conversion object information, the conversion object information indicates target data on which the conversion scheme needs to be performed, and the target data includes:

baseline data; or
gain map data; or
the baseline data and the gain map data.

In a possible implementation, when the target data includes the baseline data, the conversion scheme information includes a baseline data conversion scheme, and the baseline data conversion scheme indicates to perform at least one of the following conversion on the baseline data:

color gamut conversion;
color compensation; or
color space conversion.

In a possible implementation, the baseline data conversion scheme further indicates a conversion parameter used when the conversion is performed.

In a possible implementation, when the baseline data conversion scheme indicates that the color compensation is performed, the conversion parameter includes any one of the following parameters:

a color compensation matrix;
a conversion function; or
a compensation value and a compensation method.

In a possible implementation, when the target data includes the gain map data, the conversion scheme information includes a gain map data conversion scheme, and the gain map data conversion scheme indicates to perform at least one of the following conversion on the gain map data:

color space conversion; and
channel conversion, where the channel conversion is used to restore a channel of the gain map data to an original channel.

In a possible implementation, the gain map data conversion scheme further indicates a conversion parameter used when the first gain map data is converted.

In a possible implementation, when the location at which the conversion occurs is after the new HDR image is synthesized, the conversion scheme information includes an image conversion scheme, and the image conversion scheme indicates to perform at least one of the following conversion on the new HDR image:

color gamut conversion; or
color compensation.

In embodiments of this application, the color mode information of the baseline, and/or color mode information/the color mode information of a gain map image/gain map data, and/or color mode information/the color mode information that is to be transformed and processed and that corresponds tothe baseline and the gain map image/gain map data may be transferred in the preset metadata. A baseline image and/or the gain map image/gain map data are/is converted based on the information. In this way, conversion flexibility is higher, and multi-format adaptation can be implemented for the metadata. This can facilitate more efficient and reasonable encoding.

In embodiments of this application, the chrominance format information of the baseline, and/or chrominance format information/the chrominance format information of the gain map image/gain map data, and/or chrominance format information/the chrominance format information that is to be transformed and processed and that is of the baseline and the gain map data may be transferred in the preset metadata. The baseline image and/or the gain map image/gain map data are/is converted based on the information. In this way, a matching degree of color gamuts of different display devices is higher, and color space conversion is supported. This can facilitate more efficient and reasonable encoding.

In embodiments of this application, information about how a plurality of channels of the color mode of the baseline and a plurality of channels or a single channel of a color mode/the color mode of the gain map image/gain map data are combined may be transferred in the preset metadata. In this way, conversion flexibility is higher, and the metadata may implement flexible adaptation of a plurality of manners.

According to a fifth aspect, an embodiment of this application provides a decoding apparatus. The apparatus includes modules configured to perform the decoding method in any one of the first aspect or the possible designs of the first aspect.

According to a sixth aspect, an embodiment of this application provides an encoding apparatus. The apparatus includes modules configured to perform the encoding method in any one of the second aspect or the possible designs of the second aspect.

According to a seventh aspect, an embodiment of this application provides an electronic device. The electronic device includes at least one processor and a memory. The memory is configured to store a group of computer instructions. When the processor is used as an execution device in any one of the first aspect or the possible implementations of the first aspect to execute the group of computer instructions, operation steps of the decoding method in any one of the first aspect or the possible implementations of the first aspect are performed. Alternatively, when the processor is used as an execution device in any one of the second aspect or the possible implementations of the second aspect to execute the group of computer instructions, operation steps of the encoding method in the second aspect or any possible implementation of the second aspect are performed.

According to an eighth aspect, an embodiment of this application provides an encoding and decoding system. The system includes a first electronic device and a second electronic device. The first electronic device is configured to perform the decoding method in any one of the first aspect or the possible designs of the first aspect, and the second electronic device is configured to perform the encoding method in any one of the first aspect or the possible designs of the first aspect.

According to a ninth aspect, an embodiment of this application provides a computer-readable storage medium. The computer-readable storage medium includes computer software instructions. When the computer software instructions are run on a computing device, the computing device is enabled to perform operation steps of the method in any one of the first aspect or the possible implementations of the first aspect.

According to a tenth aspect, an embodiment of this application provides a computer program product. When the computer program product runs on a computer, a computing device is enabled to perform the operation steps of the method in any one of the first aspect or the possible implementations of the first aspect.

For beneficial effect of the third aspect to the eighth aspect, refer to the descriptions of any implementation of the first aspect or the second aspect. Details are not described herein again. In this application, based on implementations provided in the foregoing aspects, the implementations may be further combined to provide more implementations.

## BRIEF DESCRIPTION OF DRAWINGS

FIG. 1 is a diagram of dynamic range mapping;
FIG. 2 is an image of a PQ optical-electro transfer function;

FIG. 3 is an image of an HLG optical-electro transfer function;

FIG. 4 is an image of an SLF optical-electro transfer function;

FIG. 5 is a diagram of an end-to-end process of an HDR object according to this application;

FIG. 6 is a diagram of an end-to-end system architecture of an HDR object according to this application;

FIG. 7 is a diagram of an end-to-end image processing system according to this application;

FIG. 8 is a diagram of a working procedure of a streaming media system according to this application;

FIG. 9 is a diagram of an architecture of a streaming media system according to this application;

FIG. 10 is a block diagram of an encoding and decoding system to which this application is applied;

FIG. 11 is a block diagram of a content providing system according to this application;

FIG. 12 is a diagram of a working procedure of a terminal device according to this application;

FIG. 13A is a schematic flowchart of a first type of image processing according to this application;

FIG. 13B is a schematic flowchart of a second type of image processing according to this application;

FIG. 13C is a schematic flowchart of a third type of image processing according to this application;

FIG. 13D is a schematic flowchart of a fourth type of image processing according to this application;

FIG. 13E is a schematic flowchart of a fifth type of image processing according to this application;

FIG. 13F is a schematic flowchart of a sixth type of image processing according to this application;

FIG. 14 is a schematic flowchart of a data processing method according to this application;

FIG. 15 is a diagram of a first conversion process according to this application;

FIG. 16 is a diagram of a second conversion process according to this application;

FIG. 17 is a diagram of a third conversion process according to this application;

FIG. 18 is a diagram of a fourth conversion process according to this application;

FIG. 19 is a diagram of a structure of an encoding apparatus according to this application;

FIG. 20 is a diagram of a structure of an encoding device according to this application;

FIG. 21 is a diagram of a structure of a decoding apparatus according to this application; and

FIG. 22 is a diagram of a structure of a decoding device according to this application.

## DESCRIPTION OF EMBODIMENTS

To make the objectives, technical solutions, and advantages of this application clearer, the following further describes this application in detail with reference to accompanying drawings.

The term "at least one" in this application means one or more, namely, including one, two, three, or more, and "a plurality of' means two or more, namely, including two, three, or more.

In embodiments of this application, the term "at least one" means one or more, and "a plurality of' means two or more. The term "and/or" is to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate a, b, c, a-b, a-c, b-c, or a-b-c, where any one of a, b, c, a-b, a-c, b-c, or a-b-c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance of the two criteria.

In addition, the terms "include" and "have" in embodiments, claims, and accompanying drawings of this application are not exclusive. For example, a process, a method, a system, a product, or a device including a series of steps or modules/units is not limited to the listed steps or modules, and may further include steps or modules/units that are not listed.

To facilitate understanding of embodiments of this application, some concepts or terms in embodiments of this application are explained.

A color value (color value) is a value corresponding to a specific color component (for example, R, G, B, or Y) of an image. The color value may include a linear color value (linear color value) and a nonlinear color value (nonlinear color value).

The linear color value is in direct proportion to light intensity. In a possible case, the value should be normalized to [0, 1], and is E for short.

The nonlinear color value is a normalized digital expression value of image information, and is in direct proportion to a digital code value. In a possible case, the value should be normalized to [0, 1], and is E' for short.

The digital code value (digital code value) is a digital expression value of an image signal, and the digital code value represents the nonlinear color value.

An electro-optical transfer function (electro-optical transfer function, EOTF) describes a relationship of conversion from the nonlinear color value to the linear color value.

Metadata (metadata) is data that is carried in a video signal and that describes video source information.

Dynamic metadata (dynamic metadata) is metadata associated with each frame of image, and the metadata varies with an image.

Static metadata (static metadata) is metadata associated with an image sequence, and the metadata remains unchanged in the image sequence.

A luminance (luma) signal represents a combination of nonlinear color signals, and is symbolized by Y'.

Luminance mapping (luminance mapping) is mapping from luminance of a source picture to luminance of a target system.

Display adaptation (display adaptation) is to process a video signal to adapt to a display characteristic of a target display.

The source picture (source picture) is a picture that is input in an HDR pre-processing phase.

A mastering display (mastering display) is a reference display used when the video signal is edited and produced, and is used to determine editing and production effect of a video.

A linear scene light (linear scene light) signal is an HDR video signal using content as scene light in an HDR video technology, is scene light captured by a camera/webcam sensor, and is usually a relative value. HLG encoding is performed on the linear scene light signal to obtain an HLG signal. The HLG signal is a scene light signal, and the HLG signal is nonlinear. A scene light signal usually needs to be converted into a display light signal by using an opto-optical transfer function (Opto-Optical Transfer Function, OOTF), to be displayed on a display device.

A linear display light (linear display light) signal is an HDR video signal using content as display light in the HDR video technology, is display light emitted by a display device, and is usually an absolute value in a unit of nits. PQ encoding is performed on the linear display light signal to obtain a PQ signal. The PQ signal is a display light signal, and the PQ signal is a nonlinear signal. The display light signal is usually displayed on the display device based on absolute luminance of the display light signal.

The opto-optical transfer function (OOTF) is a curve for converting one light signal into another light signal in a video technology.

Luminance-chrominance-chrominance (luma-chroma-chroma, LCC) represents three components of a video signal in which luminance and chrominance are separated.

Dynamic range (dynamic range): In most fields, the dynamic range indicates a ratio of a maximum value to a minimum value of a variable. In the digit image field, a dynamic range indicates a ratio of a maximum grayscale value of a pixel of an image to a minimum grayscale value of the pixel of the image. The grayscale value may also be understood as a luminance value, in a unit of nit (nit) or candela per square meter ($cd/m^2$). 1 nit=1 $cd/m^2$.

Generally, a dynamic range in the natural world is large. Luminance of a night scene under the starry sky is about $10^{-3}$ $cd/m^2$, and luminance of the sun is as high as $10^9$ $cd/m^2$. In this way, the dynamic range reaches $10^9/10^{-3}=10^{12}$. In a real scene in the natural world, because the luminance of the sun and luminance of starlight cannot be obtained at the same time, a dynamic range of a real scene in a natural environment may not reach a magnitude of $10^{12}$. For the real scene in the natural environment, the dynamic range is generally within a range of $10^{-3}$ to $10^6$.

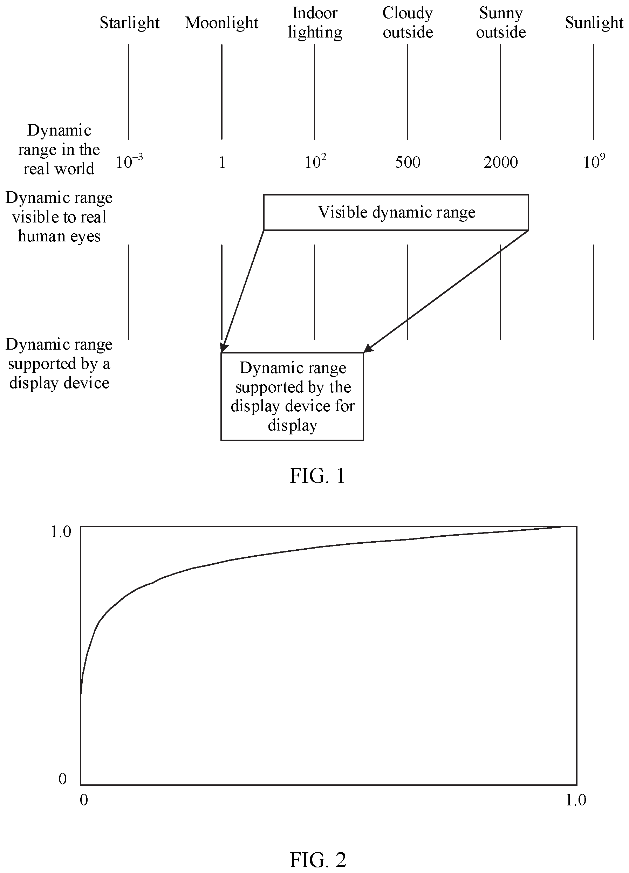

It may be understood that the dynamic range is classified into a high dynamic range (high dynamic range, HDR) or a low dynamic range (standard dynamic range, SDR), and the low dynamic range may also be referred to as a standard dynamic range. Generally, an image whose luminance range ranges from $10^{-3}$ to $10^6$ is referred to as a high dynamic range image, and an image whose luminance range ranges from 0 to 255 is referred to as a low dynamic range image. Currently, in most color digital images, a pixel of each of R, G, and B channels is represented by using one byte (that is, 8 bits). In other words, a luminance representation range of the pixels of each channel is 0 to 255. 0 to 255 herein is a standard dynamic range of the image. An imaging process of a digital camera is actually mapping of a dynamic range in the real world to a dynamic range supported by a display device for display. This is usually a nonlinear process. FIG. 1 is a diagram of dynamic range mapping.

An optical-electro transfer function (optical-electro transfer function, OETF) represents a relationship of conversion from a linear signal of an image pixel to a nonlinear signal. The optical-electro transfer function may include the following three types: a perceptual quantizer (Perceptual Quantizer, PQ) optical-electro transfer function, a hybrid log-gamma (Hybrid Log-Gamma, HLG) optical-electro transfer function, and a scene luminance fidelity (Scene Luminance Fidelity, SLF) optical-electro transfer function. The three types of optical-electro transfer functions are optical-electro transfer functions specified in the audio video coding standard (Audio Video coding Standard, AVS).

(1) PQ optical-electro transfer function

The PQ optical-electro transfer function is a perceptual quantizer optical-electro transfer function provided based on a luminance perception model for human eyes. FIG. 2 is an image of the PQ optical-electro transfer function. A computing device may use the PQ optical-electro transfer function to represent a relationship of conversion from a linear signal value of an image pixel to a nonlinear signal value in a PQ domain. The PQ optical-electro transfer function may be represented as Formula (1):

$$L' = PQ\_TF(L) = \left(\frac{c_1 + c_2 L^{m_1}}{1 + c_3 L^{m_1}}\right)^{m_2} \quad \text{Formula (1)}$$

Herein, L indicates the linear signal value, and a value of L is normalized to [0, 1]; L' indicates the nonlinear signal value, and a value range of L' is [0, 1]; and $m_1$, $m_2$, $c_1$, $c_2$, and $c_3$ are PQ optical-electro transfer coefficients. $m_1$, $m_2$, $c_1$, $c_2$, and $c_3$ satisfy the following relationships:

$$m_1 = \frac{2610}{4096} \times \frac{1}{4} = 0.1593017578125$$

$$m_2 = \frac{2523}{4096} \times 128 = 78.84375$$

$$c_1 = c_3 - c_2 + 1 = \frac{3424}{4096} = 0.8359375$$

$$c_2 = \frac{2413}{4096} \times 32 = 18.8515625$$

$$c_3 = \frac{2392}{4096} \times 32 = 18.6875$$

For example, a color model of an image is a red green blue (red green blue, RGB) mode. A conversion process of an RGB image by using the PQ optical-electro transfer function may be represented by using Formula (2):

$$\begin{cases} R' = PQ\_TF(\max(0, (R/10000,1))) \\ G' = PQ\_TF(\max(0, (G/10000,1))) \\ B' = PQ\_TF(\max(0, (B/10000,1))) \end{cases} \quad \text{Formula (2)}$$

(2) HLG optical-electro transfer function

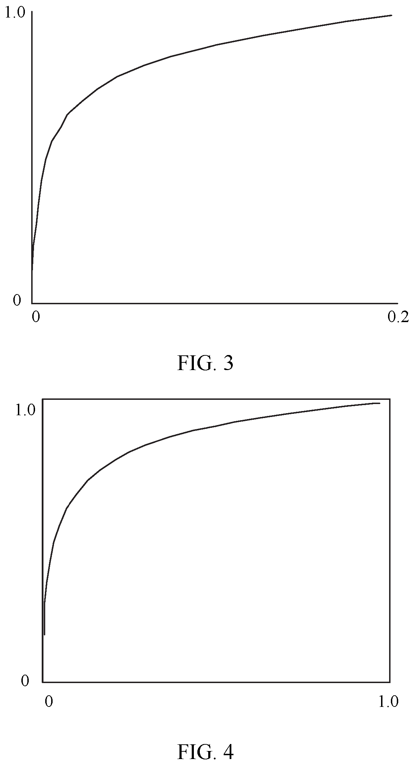

The HLG optical-electro transfer function is obtained by modifying a conventional gamma curve. FIG. 3 is an image of the HLG optical-electro transfer function. As shown in FIG. 3, the HLG optical-electro transfer function uses a conventional gamma curve in a low range and supplements a log curve in a high range. The HLG optical-electro transfer function indicates a relationship of conversion from a linear signal value of an image pixel to a nonlinear signal value in an HLG domain, and the HLG optical-electro transfer function may be expressed as Formula (3):

$$L' = \text{HLG}_{\text{TF(L)}} = \begin{cases} \frac{\sqrt{L}}{2}, \ 0 \le L < 1 \\ a\ln(L - b) + c, 1 < L \end{cases} \quad \text{Formula (3)}$$

Herein, L indicates the linear signal value, and a value range of L is [0, 12]; L' indicates the nonlinear signal value, and a value range of L' is [0, 1]; a, b, and c are HLG optical-electro transfer coefficients; a=0.17883277; b=0.28466892; and c=0.55991073.

(3) SLF optical-electro transfer function

The SLF optical-electro transfer function is an optimal curve obtained based on luminance distribution in an HDR scene when optical characteristics of human eyes are satisfied. FIG. 4 is an image of the SLF optical-electro transfer function. The SLF optical-electro transfer function indicates a relationship of conversion from a linear signal value of an image pixel to a nonlinear signal value in an SLF domain. The relationship of conversion from the linear signal value of the image pixel to the nonlinear signal value in the SLF domain may be represented as Formula (4):

$$\begin{cases} R' = SLF\_TF(\min(0, (R/10000, 1))) \\ G' = SLF\_TF(\min(0, (G/10000, 1))) \\ B' = SLF\_TF(\min(0, (B/10000, 1))) \end{cases} \text{Formula (4)}$$

The SLF optical-electro transfer function may be represented as Formula (5):

$$L' = SLF_{TF(L)} = a \times (\frac{p \times L}{(p-1) \times L})^m + b \text{ Formula (5)}$$

Herein, L indicates the linear signal value, and a value of L is normalized to [0, 1]; L' indicates the nonlinear signal value, and a value range of L' is [0, 1]; p, m, a, and b are SLF optical-electro transfer coefficients; p=2.3; m=0.14; a=1.12762, and b=0.12762.

Linear space: A linear space in this application is a space in which a linear light signal is located.

Nonlinear space: A nonlinear space in this application is a space in which a signal obtained after a linear light signal is converted by using a nonlinear curve is located. Common HDR nonlinear curves include a PQ EOTF-1 curve, an HLG OETF curve, and the like, and a common SDR nonlinear curve includes a gamma curve. Generally, it is considered that the signal obtained after the linear light signal is encoded by using the nonlinear curve is visually linear relative to human eyes. It should be understood that the nonlinear space may be considered as a visual linear space.

Gamma correction (gamma correction): Gamma correction is a method for performing nonlinear tone editing on an image. A dark-colored part and a light-colored part in an image signal may be detected, and proportions of the two parts are increased, to improve contrast effect of the image. Optical-electro transfer characteristics of existing display screens, photographic films, and many electronic cameras may be nonlinear. A relationship between outputs and inputs of these nonlinear components may be represented by using a power function, that is, output=(input) $\gamma$.

Because a human visual system is nonlinear and human beings perceive visual stimulation through comparison, nonlinear conversion is performed on a color value output by a device. Stimulation is enhanced by the outside world at a particular proportion, and for the human being, such stimulation evenly increases. Therefore, for perception of the human being, a physical quantity increasing in a geometric progression is even. To display input colors based on a visual law of the human being, nonlinear conversion in the form of the power function is needed, to convert a linear color value into a nonlinear color value. The value $\gamma$ of gamma may be determined based on an optical-electro transfer function of a color space.

Color space (color space): Colors may be different perceptions of eyes for light rays having different frequencies, or may indicate objectively existing light having different frequencies. The color space is a color range defined by a coordinate system that is established by people to indicate colors. A color gamut mode and a color model jointly define a color space. The color model is an abstract mathematical model that represents a color by using a group of color components. The color model may include, for example, a red green blue (red green blue, RGB) mode and a cyan magenta yellow key plate (cyan magenta yellow key plate, CMYK) mode. A color gamut is a sum of colors that can be generated by a system. For example, Adobe RGB and sRGB are two different color spaces based on an RGB model. In this application, the color model may also be referred to as a color mode.

An RGB space is a space that uses luminance of three primary colors, that is, red, green, and blue, to quantitatively indicate a video or image signal. A YCC space indicates a color space in which luminance and chrominance are separated. Three components of a YCC space video or image signal respectively indicate luminance-chrominance-chrominance. Common YCC space video signals include YUV, YCbCr, ICtCp, and the like. In this application, luminance and chrominance separation may be referred to as luminance-chrominance separation for short, and luminance and chrominance non-separation may be referred to as luminance-chrominance non-separation for short.

Each device like a display or a printer has a color space of the device, and can generate colors only in a color gamut of the device. When an image is transferred from one device to another device, because each device converts the image based on a color space of the device and displays RGB or CMYK, colors of the image may change on different devices.

To obtain an image with a higher dynamic range, a bit width of the image is usually greater than or equal to 10 bits (bit, b). Common coding standards that support an HDR object include H.266, H.265, and High Efficiency Image Format (high efficiency image format, HEIF). The Joint Photographic Experts Group (joint photographic experts group, JPEG) and H.264 support only 8-bit coding, and therefore cannot well support an HDR video and an HDR image.

During distribution or transmission of the HDR image or the HDR video, a dynamic range of the HDR image or the HDR video may need to be converted to a dynamic range supported by a display device (for example, a television or an iPad). In this way, a converted dynamic range of the HDR image or HDR video is adapted to the display device, so that the HDR image or HDR video is displayed on the display device. Generally, the following two schemes may be used to convert the dynamic range of the HDR image or the HDR video.

(1) Single-layer transcoding scheme

The HDR image or the HDR video may need to be transcoded during delivery or transmission. In a current HDR transcoding scheme, the HDR image or the HDR video is directly transcoded. After the HDR image or the HDR video is decoded, an HDR pixel value, and an HDR format identifier and information are obtained. The HDR pixel value usually needs to be processed (for example, undergoes image upsampling/downsampling and enhancement). The HDR format identifier and information, and a processed HDR pixel value are then sent to an encoder for re-encoding. A re-encoded HDR image or HDR video is delivered to another device.

This scheme of direct transcoding the HDR image or the HDR video may cause an abnormal transcoded HDR image or HDR video, affecting user experience. A reason is as follows: During transcoding (decoding is performed, and then encoding is performed) of a single-layer encoded HDR bitstream, a transcoding system needs to correctly send all HDR information obtained by a decoder to the encoder. If information is lost, the transcoding system cannot perform re-encoding in a correct format. Consequently, an incorrect bitstream is generated, and abnormal visual effect occurs when a user watches a video. This significantly affects user experience. Currently, many delivery and transcoding systems on the market have not been upgraded to support correct sending of the HDR information from the decoder to the encoder. Therefore, mainstream mobile phone and application manufacturers have received many user complaints in this regard.

(2) Baseline and gain map image conversion scheme

In this scheme, a color gamut range of the HDR image or the HDR video is converted, to implement conversion of the dynamic range of the HDR image or the HDR video. An encoder transmits baseline data and gain map data to a decoder. The decoder receives and combines the baseline data and the gain map data to obtain an image that is supported by the display device for display and that has a new dynamic range. A color gamut range of the baseline data transmitted by the encoder should match a color gamut range of the display device. If the color gamut range of the baseline data of the encoder does not match the color gamut range of the display device, the encoder should convert the color gamut range of the baseline data to obtain converted baseline data that matches the color gamut range of the display device, and transmit the converted baseline data to the display device. For example, the color gamut range of the baseline data is P3, and the color gamut range of the display device is Rec.2020. In this case, the encoder converts the color gamut range of the baseline data from P3 to Rec.2020, to obtain the converted baseline data. The encoder sends the converted baseline data and the gain map data to the decoder. For example, the encoder may convert the color gamut range of the baseline data from P3 to Rec.2020 by using a color gamut mapping matrix.

In this scheme of adjusting the color gamut range of the HDR image or the HDR video, if a color gamut of the display device changes, encoding transmission adaptation needs to be performed again, and flexibility is insufficient. In addition, only the color gamut range is adjusted in a conversion process, and encoding efficiency is low.

Based on this, this application provides a data processing method. The method includes: An encoder obtains a first image, and the encoder determines baseline data, gain map data, and metadata of the first image based on the first image. The encoder encodes the baseline data, the gain map data, and the metadata to obtain a bitstream. A decoder receives and parses the bitstream to obtain the baseline data, the gain map data, and the metadata of the first image. The decoder determines and converts target data (that is, the baseline data, or the gain map data, or an image obtained by combining the baseline data and the gain map data) based on conversion information carried in the metadata. In this way, the decoder determines and converts the target data based on the conversion information carried in the metadata, so that conversion performed on the target data matches the target data. The decoder converts the target data based on the conversion information matching the target data, so that a dynamic range of an image obtained through conversion can better adapt to a dynamic range supported by a display device, thereby improving display effect.

The encoder may also be referred to as an encoding side, an encoding device, or an encoder side. The encoder encodes the obtained images to obtain the bitstream.

The decoder may also be referred to as a decoding side, a decoding device, or a decoder side. The decoder decodes the received bitstream to obtain the images.

The baseline data may also be referred to as a baseline image (baseline image), baseline, base data, a base image, a basic image, basic data, a basic layer, basic layer data, or a basic picture. The baseline data may be an SDR image or an HDR image with a low dynamic range.

The gain map data may also be referred to as a gain map (gain map), a enhancement layer, an enhancement image, a gain layer, gain layer data, a gain layer image, or a gain image. The gain map data may include some detail information of the image. In this way, the baseline data is supplemented by using the image detail information included in the gain map data, to obtain an HDR image with better display effect through synthesis.

For ease of description, terms "SDR object" and "HDR object" are used in some embodiments of this application. The SDR object may be a static SDR image (which may also be referred to as an SDR image, an SDR photo, an SDR picture, or the like), or may be an SDR video or another type of dynamic SDR image, or may be a frame of image in an SDR video or dynamic SDR image. The HDR object may be a static HDR image (which may also be referred to as an HDR image, an HDR photo, an HDR picture, or the like), or may be an HDR video or another type of dynamic HDR image, or may be a frame of image in an HDR video or dynamic HDR image.

It may be understood that for ease of description, in some embodiments of this application, the technical solutions of this application are described by using the HDR image as an example. However, it may be understood that these embodiments may be applied not only to the HDR image, but also to another HDR object, for example, an HDR video, a dynamic HDR image, or a frame of image in the HDR video or dynamic HDR image.

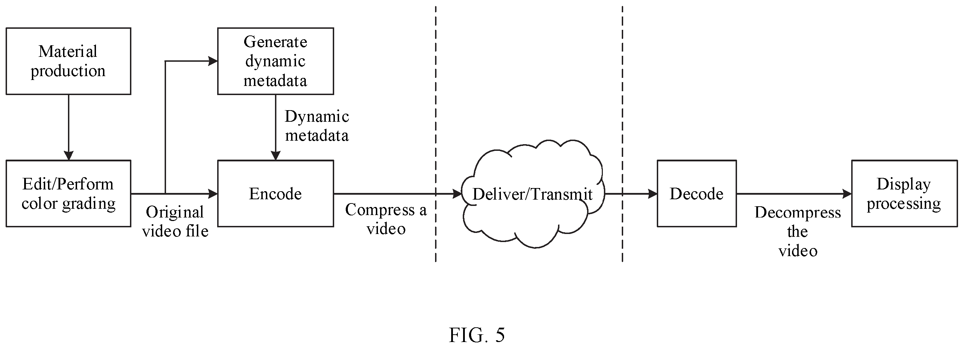

The HDR object needs to be an end-to-end process to obtain better experience. FIG. 5 is a diagram of an end-to-end process of an HDR object according to this application. As shown in FIG. 5, an original video file (which may also be referred to as a master file) is obtained through procedures such as material production (for example, shooting a video or producing a computer graphics (computer graphics, CG) video), editing, and color grading. Dynamic metadata is then generated based on the original video file. The original video file and the dynamic metadata are encoded to obtain a compressed video. The compressed video is delivered/transmitted (a delivery side is a streaming media server, a CDN, or the like, and the delivery side usually needs to perform transcoding, that is, a process of performing decoding and then performing encoding) to a terminal device (for example, a computer, a set-top box, a mobile phone, or a tablet computer). The terminal device decodes the compressed video to obtain a decompressed video. Then, the decompressed video is displayed, via a display device (for example, a display or a television), for watching by a user.

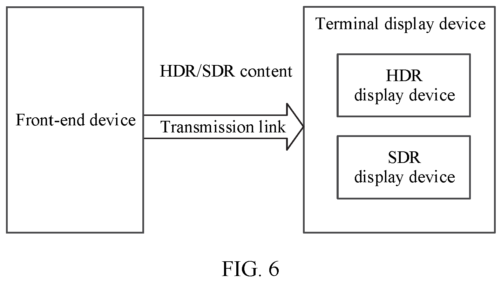

The end-to-end process of the HDR object described in FIG. 5 may be completed by using a system shown in FIG. 6. FIG. 6 is a diagram of an end-to-end system architecture of the HDR object according to this application. As shown in FIG. 6, the system includes a front-end device, a transmission link, and a terminal display device.

The front-end device is configured to capture or produce HDR content or SDR content (for example, an HDR video or image, or an SDR video or image).

In a possible embodiment, the front-end device may be further configured to extract corresponding metadata from the HDR content. The metadata may include conversion information, dynamic metadata corresponding to the HDR content, and static metadata corresponding to the HDR content. The front-end device may send the HDR content and the metadata to the terminal display device over the transmission link. Specifically, the HDR content and the metadata may be transmitted in a form of one data packet, or respectively transmitted in two data packets. This is not specifically limited in embodiments of this application.

In a possible embodiment, the terminal display device may be configured to receive the metadata and the HDR content, extract, from the HDR content, the conversion information included in the corresponding metadata and information about the terminal display device, obtain conversion location information and conversion scheme information, convert the HDR content into display content adapted to an HDR display device or an SDR display device in the terminal display device, and display the display content. It should be understood that, in different embodiments, the terminal display device may include a display device having a display capability with a lower dynamic range or a higher dynamic range than the HDR content generated by the front-end device. This is not limited in this application.

In a possible embodiment, the front-end device and the terminal display device in this application may be independent and different physical devices. For example, the front-end device may be a video capturing device, or may be a video production device. The video capturing device may be a device like a video camera, a camera, or an image drawing machine. The terminal display device may be a device with a video play function, for example, virtual reality (virtual reality, VR) glasses, a mobile phone, a tablet, a television, or a projector.

In a possible embodiment, the transmission link between the front-end device and the terminal display device may be a wireless connection or a wired connection. The wireless connection may use technologies such as long term evolution (long term evolution, LTE), the 5th generation (5th generation, 5G) mobile communication, and future mobile communication. The wireless connection may further include technologies such as wireless fidelity (wireless fidelity, Wi-Fi), Bluetooth, and near field communication (Near Field Communication, NFC). The wired connection may include an Ethernet connection, a local area network connection, and the like. This is not specifically limited.

In this application, functions of the front-end device and functions of the terminal display device may alternatively be integrated into a same physical device, for example, a terminal device having a video photographing function, like a mobile phone or a tablet. In this application, a part of the functions of the front-end device and a part of the functions of the terminal display device may alternatively be integrated into a same physical device. This is not specifically limited.

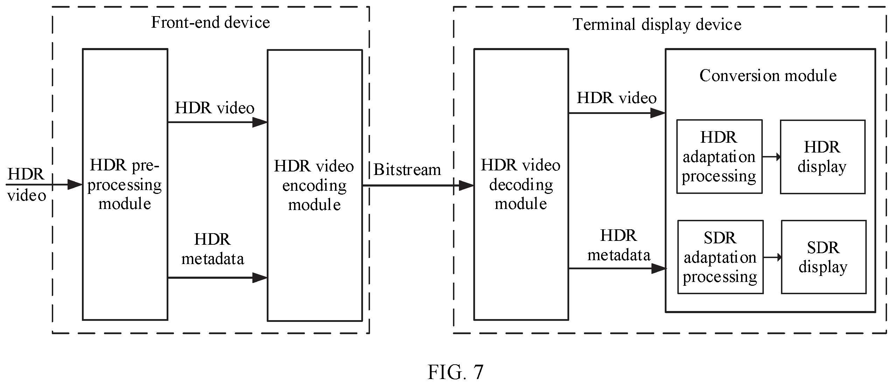

FIG. 7 is a diagram of an end-to-end image processing system according to this application. In FIG. 7, for example, HDR content or SDR content is an HDR video. The image processing system includes an HDR pre-processing module, an HDR video encoding module, an HDR video decoding module, and a conversion module.

The HDR pre-processing module and the HDR video encoding module may be located in the front-end device shown in FIG. 6, and the HDR video decoding module and the conversion module may be located in the terminal display device shown in FIG. 6.

The HDR pre-processing module is configured to: extract dynamic metadata (for example, a color mode, a chrominance format, channel information, a conversion location, and a conversion scheme) from the HDR video, and determine the conversion scheme based on the dynamic metadata and a display capability of a display device configured to display an image processed by the image processing system in FIG. 7. In addition, the HDR pre-processing module obtains HDR metadata based on the dynamic metadata determined according to the conversion scheme, and transmits the HDR metadata. The HDR video may be captured, or may be an HDR video processed by a colorist. The display capability of the target display device is a displayable luminance range of the target display device.

The HDR video encoding module is configured to perform video encoding on the HDR video and the HDR metadata according to a video compression standard (for example, an AVS or HEVC standard) (for example, embed the HDR metadata into a user-defined part of a bitstream), to output a corresponding bitstream (an AVS or HEVC bitstream).

The HDR video decoding module is configured to: decode a generated bitstream (for example, an AVS bitstream, an AVC/H.264 bitstream, an HEVC/H.265 bitstream, or a VVC/H.266 bitstream) according to a standard corresponding to a bitstream format, and output a decoded HDR video and decoded HDR metadata.

The conversion module is configured to: determine the conversion scheme based on conversion information in the decoded HDR metadata; convert (that is, perform HDR adaptation processing or SDR adaptation processing on) the decoded HDR video; and send a converted HDR adaptation video to an HDR display terminal for display, or send an SDR adaptation video to an SDR display terminal for display.

For example, the HDR pre-processing module may exist in a video capturing device or a video production device.

For example, the HDR video encoding module may exist in the video capturing device or the video production device.

For example, the HDR video decoding module may exist in a set-top box, a television display device, a mobile terminal display device, and a video conversion device like a live streaming or network video application.

For example, the conversion module may exist in the set-top box, the television display device, the mobile terminal display device, and the video conversion device like the live streaming or network video application. More specifically, the conversion module may exist in a form of a chip or a software program in the set-top box, the television display device, or the mobile terminal display device, and may exist in a form of a software program in the video conversion device like the live streaming or network video application.

In a possible embodiment, when both the conversion module and the HDR video decoding module exist in the set-top box, the set-top box may complete functions of receiving, decoding, and converting a video bitstream. The set-top box sends, through a high-definition multimedia interface (high-definition multimedia interface, HDMI), video data obtained through decoding to a display device for display, so that a user can enjoy video content.

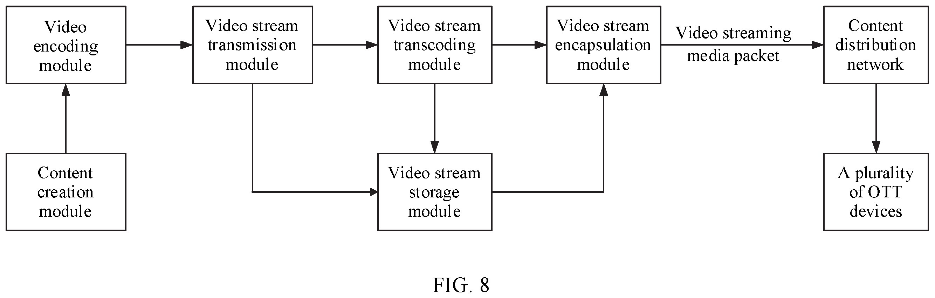

The end-to-end process described in FIG. 5 to FIG. 7 may be completed by using a streaming media system. FIG. 8 is a diagram of a working procedure of a streaming media system according to this application. As shown in FIG. 8, the streaming media system includes a content creation module, a video encoding module, and a video stream transmission module. The content creation module generates required content data, for example, a video or audio. The video encoding module encodes the content data generated by the content creation module via an encoder. The video stream transmission module transmits an encoded video in a form of a bitstream.

In some possible cases, the streaming media system further includes a video stream transcoding module. The video stream transcoding module may convert a format of a video stream into a bitstream format of a transmission protocol commonly used by an OTT (over-the-top) device. For example, the protocol includes but is not limited to a real-time streaming protocol (Real-Time Streaming Protocol, RTSP), a hypertext transfer protocol (Hypertext Transfer Protocol, HTTP), an HTTP live streaming protocol (HTTP Live streaming protocol, HLS), an MPEG dynamic adaptive streaming over HTTP (MPEG Dynamic Adaptive Streaming over HTTP, MPEG-DASH), a real-time transport protocol (Real-time Transport protocol, RTP), a real-time messaging protocol (Real-time Messaging Protocol, RTMP), or any combination thereof.

In some possible cases, the streaming media system further includes a video stream storage module. The video stream storage module stores an original format and/or a plurality of converted bitstream formats of the video stream, for ease of use.

In some possible cases, the streaming media system further includes a video stream encapsulation module. The video stream encapsulation module encapsulates the video stream to generate an encapsulated video stream, and the encapsulated video stream may be referred to as a video streaming media packet. For example, the video streaming media packet may be generated based on a transcoded video stream or a stored video stream.

In some possible cases, the streaming media system further includes a content delivery network (content delivery network, CDN). The CDN is used to distribute the video streaming media packet to a plurality of OTT devices, for example, a mobile phone, a computer, a tablet, and a home projector.

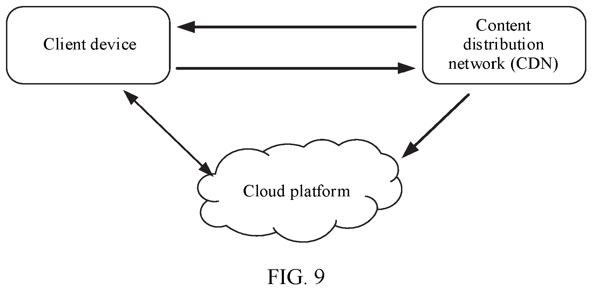

It should be noted that video encoding, video stream transmission, video stream transcoding, video stream storage, video streaming media packet generation, and the CDN may all be implemented by using a cloud platform. FIG. 9 is a diagram of an architecture of a streaming media system according to this application. As shown in FIG. 9, the streaming media system includes a client device (or a client for short), a CDN, and a cloud platform.

A user on the client sends a play or playback request to the cloud platform. In some possible examples, content of the sent request may be a title of a played movie or a TV program.

The cloud platform makes a decision, replies to the client, and sends an address of the content of the request of the user on the CDN to the client. In some possible examples, the content sent to the client may be a URL (uniform resource locator) link. Specifically, a playback application service on the cloud platform checks user authorization and permission, and then determines which specific files are required to process the playback request by considering features of each client and current network conditions. It should be noted that the content delivery network (CDN) periodically reports a running status, a learned route, and available content (file) to a cache control service on the cloud platform.

Then, the client requests, based on the address, the CDN to play the content. The CDN provides the content to the client and finally completes the request of the user.

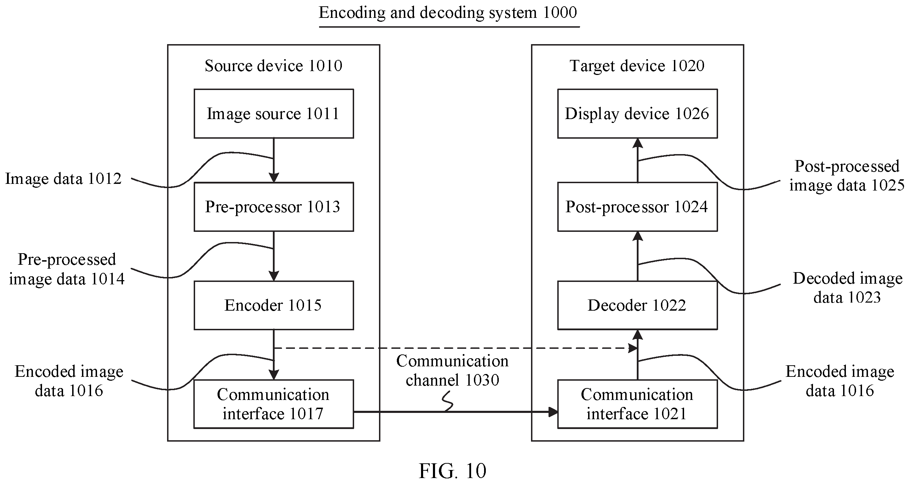

The foregoing describes, with reference to the accompanying drawings, obtaining by the front-end device, the transmission link or distribution/transmission by the CDN, and the process in which the display device displays the HDR object or the SDR object. The following describes, with reference to the accompanying drawing, an encoding and decoding system to which this application is applied. FIG. 10 is a block diagram of an encoding and decoding system to which this application is applied. For example, a video encoding and decoding system 1000 (or briefly referred to as an encoding and decoding system 1000) in this application may be used. A video encoder 1015 (or briefly referred to as an encoder 10 15) and a video decoder 1022 (or briefly referred to as a decoder 1022) of the video encoding and decoding system 1000 represent devices or the like that may be configured to perform various techniques based on various examples described in this application.

As shown in FIG. 10, the encoding and decoding system 1000 includes a source device 1010. The source device 1010 is configured to provide encoded data such as an encoded image to a target device 1020 for decoding the encoded data.

The source device 1010 includes the encoder 1015, and optionally, may further include an image source 1011, a pre-processor 1013 (or a pre-processing unit, an image pre-processor, or the like), and a communication interface 1017 or a communication unit 1017.

The image source 1011 may include or may be any type of image capturing device configured to capture an image in the real world and the like, and/or any type of image generation device, for example, a computer graphics processor configured to generate a computer animated image, or any type of device configured to obtain and/or provide an image in the real world, a computer generated image (for example, content on a screen, a virtual reality (virtual reality, VR) image, and/or any combination thereof (for example, an augmented reality (augmented reality, AR) image)). The image source may be any type of memory or storage storing any of the foregoing images.

To distinguish processing performed by the pre-processor 1013 or the pre-processing unit 1013, an image or image data 1012 may also be referred to as a raw image or raw image data 1012.

The pre-processor 1013 is configured to: receive the (raw) image data 1012, and perform pre-processing on the image data 1012 to obtain a preprocessed image 1014 or preprocessed image data 1014. Pre-processing performed by the pre-processor 1013 may, for example, include trimming, color format conversion (for example, from RGB to YCbCr), color correction, or de-noising. It may be understood that the pre-processing unit 1013 may be an optional component.

The encoder 1015 is configured to receive the preprocessed image data 1014 and provide encoded image data 1016.

The communication interface 1017 of the source device 1010 may be configured to: receive the encoded image data 1016, and send the encoded image data 1016 (or any further processed version thereof) over a communication channel 1030 to another device like the target device 1020 or any other device, for storage or direct reconstruction.

The target device 1020 includes the decoder 1022 (for example, the video decoder 1022 (or briefly referred to as the decoder 1022)), and optionally, may include a communication interface 1021 or a communication unit 1021, a post-processor 1024 (or a post-processing unit 1024), and a display device 1026.

The communication interface 1021 of the target device 1020 is configured to: receive the encoded image data 1016 (or any further processed version thereof), for example, directly from the source device 1010 or from any other source device like a storage device, for example, an encoded image data storage device, and provide the encoded image data 1016 to the decoder 1022.

The communication interface 1017 and the communication interface 1021 may be configured to send or receive the encoded image data 1016 or encoded data over a direct communication link between the source device 1010 and the target device 1020, for example, a direct wired or wireless connection, or over any type of network, for example, a wired or wireless network or any combination thereof, or any type of private and public network, or any kind of combination thereof.

The communication interface 1017 may be, for example, configured to package the encoded image data 1016 into an appropriate format, for example, a packet, and/or process the encoded image data using any type of transmission encoding or processing for transmission over a communication link or communication network.

The communication interface 1021, forming the counterpart of the communication interface 1017, may be, e.g., configured to receive the transmitted data and process the transmitted data using any kind of corresponding transmission decoding or processing and/or de-packaging to obtain the encoded image data 1016.

The communication interface 1017 and the communication interface 1021 each may be configured as a unidirectional communication interface indicated by an arrow of the communication channel 1030 pointing from the source device 1010 to the target device 1020 in FIG. 10, or a bidirectional communication interface; and may be configured to send and receive a message and the like, to establish a connection, confirm and exchange any other information related to the communication link and/or data transmission such as transmission of the encoded image data.

The decoder 1022 is configured to receive the encoded image data 1016, and provide decoded image data 1023 or a decoded image 1023.

The post-processor 1024 of the target device 1020 is configured to post-process the decoded image data 1023 (also referred to as reconstructed image data), for example, the decoded image 1023, to obtain post-processed image data 1025, for example, a post-processed image 1025. The post-processing performed by the post-processing unit 1024 may include, for example, color format conversion (e.g. from YCbCr to RGB), color correction, trimming, or re-sampling, or any other processing, for example, for preparing the decoded image data 1023 for display, for example, by the display device 1026.

The display device 1026 of the target device 1020 is configured to receive the post-processed image data 1025 for displaying the image, for example, to a user or viewer. The display device 1026 may be or include any type of display for representing the reconstructed image, for example, an integrated or external display or monitor. For example, the display may include a liquid crystal display (liquid crystal display, LCD), an organic light emitting diode (organic light emitting diode, OLED) display, a plasma display, a projector, a micro LED display, a liquid crystal on silicon (liquid crystal on silicon, LCoS) display, a digital light processor (digital light processor, DLP), or any type of another display.

Although FIG. 10 shows the source device 1010 and the target device 1020 as separate devices, device embodiments may alternatively include both the source device 1010 and the target device 1020, or may include functions of both the source device 1010 and the target device 1020, that is, may include both the source device 1010 or a corresponding function and the target device 1020 or a corresponding function. In these embodiments, the source device 1010 or the corresponding function and the target device 1020 or the corresponding function may be implemented by using same hardware and/or software or by using separate hardware and/or software or any combination thereof.

Based on the descriptions, existence and (accurate) division of different units or functions in the source device 1010 and/or the target device 1020 shown in FIG. 10 may vary based on actual devices and application. This is apparent to a person skilled in the art.

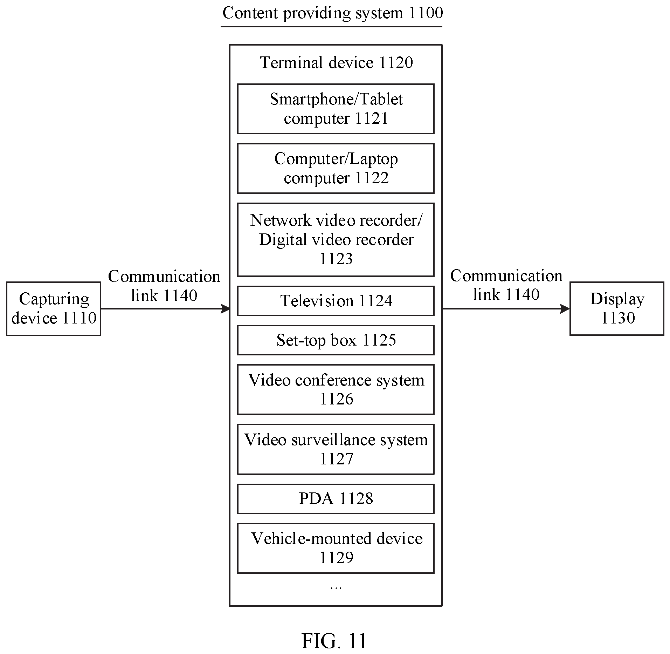

The following describes a content providing system in which the encoding and decoding system described in FIG. 10 is used with reference to FIG. 11. FIG. 11 is a block diagram of a content providing system according to this application. The content providing system 1100 includes a capturing device 1110, a terminal device 1120, and a display 1130 (optional). The capturing device 1110 communicates with the terminal device 1120 over a communication link 1140. The communication link may include the communication channel 1030 described in FIG. 10. The communication link 1140 includes but not limited to Wi-Fi, Ethernet, wired, wireless (3G/4G/5G), USB, or any kind of combination thereof, or the like.

The capturing device 1110 may implement a function of the front-end device in FIG. 6. The capturing device 1110 generates data, and may encode the data by using the encoding method shown in the foregoing embodiment. Alternatively, the capturing device 1110 may distribute the data to a streaming media server (not shown in the figure), and the server encodes the data and transmits the encoded data to the terminal device 1120. The capturing device 1110 includes but is not limited to a webcam, a smartphone or a tablet computer, a computer or a notebook computer, a video conference system, a personal digital assistant (personal digital assistant, PDA), a vehicle-mounted device, or any combination thereof. For example, the capturing device 1110 may include the foregoing source device 10 10. When the data includes a video, the encoder 1015 of the capturing device 1110 may actually perform video encoding. When the data includes audio (that is, a voice), the encoder 1015 of the capturing device 1110 may actually perform audio encoding. In some practical scenarios, the capturing device 1110 distributes encoded video data and encoded audio data by multiplexing the encoded video data and the encoded audio data together. In other practical scenarios, for example, in a video conference system, the encoded audio data and the encoded video data are not multiplexed. The capturing device 1110 separately distributes the encoded audio data and the encoded video data to the terminal device 1120.

The terminal device 1120 in the content providing system 1100 receives and reproduces the encoded data. The terminal device 1120 may be a device with data receiving and recovering capabilities, for example, a smartphone or a tablet computer 1121, a computer or a notebook computer 1122, a network video recorder (network video recorder, NVR)/digital video recorder (digital video recorder, DVR) 1123, a television 1124, a set-top box (set-top box, STB) 1125, a video conference system 1126, a video surveillance system 1127, a PDA 1128, a vehicle-mounted device 1129, or any combination thereof, or such a device capable of decoding the encoded data. For example, the terminal device 1120 may include the foregoing target device 1020. When the encoded data includes a video, the decoder 1022 of the terminal device is prioritized to perform video decoding. When the encoded data includes audio, the decoder 1022 of the terminal device is prioritized to perform audio decoding. The terminal device 1120 may be a video play application, a streaming media play application, a streaming media play platform, a live streaming platform, or the like that runs on the terminal device.

For a terminal device with a display, for example, the smartphone or the tablet computer 1121, the computer or the notebook computer 1122, the NVR/DVR 1123, the television 1124, the PDA 1128, or the vehicle-mounted device 1129, the terminal device may send decoded data to the display of the terminal device. For a terminal device without a display, for example, the STB 1125, the video conference system 1126, or the video surveillance system 1127, the device is connected to the externally connected display 1130 to receive and display decoded data.

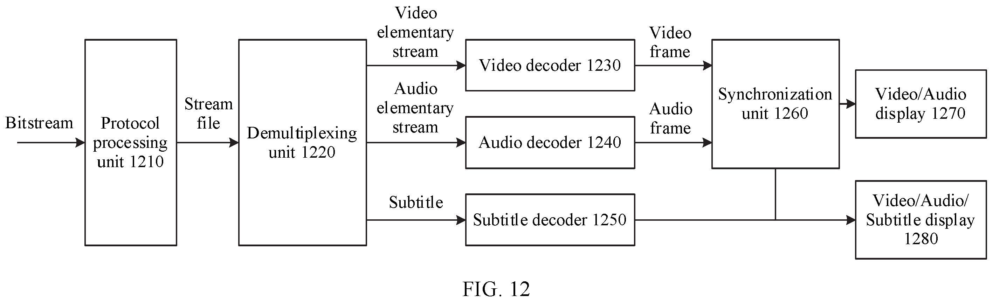

When each device in this system performs encoding or decoding, the image encoding device or the image decoding device shown in the foregoing embodiment may be used. FIG. 12 is a diagram of an example structure of the terminal device 1120 in FIG. 11. FIG. 12 is a diagram of a working procedure of the terminal device according to this application. As shown in FIG. 12, after the terminal device 1120 receives a bitstream from the capturing device 1110, a protocol processing unit 1210 analyzes a transmission protocol of the bitstream. The transmission protocol includes but is not limited to RTSP, HTTP, HLS, MPEG-DASH, RTP, RTMP, or any combination thereof.

After the protocol processing unit 1210 processes the bitstream, a stream file is generated. The stream file is output to a demultiplexing unit 1220. The demultiplexing unit 1220 may separate the multiplexed data into the encoded audio data and the encoded video data. As described above, in the other practical scenarios, for example, in the video conference system, the encoded audio data and the encoded video data are not multiplexed. In this case, the encoded data is transmitted to a video decoder 1230 and an audio decoder 1240 without using the demultiplexing unit 1220.

The demultiplexing unit 1220 processes the stream file, and generates a video elementary stream (elementary stream, ES), an audio ES, and an optional subtitle. The video decoder 1230, including the decoder 1022 described in the foregoing embodiment, decodes the video ES by using the decoding method shown in the foregoing embodiment to generate a video frame, and sends the video frame to a synchronization unit 1260. The audio decoder 1240 decodes the audio ES to generate an audio frame, and sends the audio frame to the synchronization unit 1260. Alternatively, the video frame may be stored in a buffer (not shown in the figure) before being sent to the synchronization unit 1260. Similarly, the audio frame may be stored in the buffer (not shown in the figure) before being sent to the synchronization unit 1260.

The synchronization unit 1260 synchronizes the video frame and the audio frame, and provides a video/audio to a video/audio display 1270. For example, the synchronization unit 1260 synchronizes presentation of video and audio information. The information may be encoded in syntax using time stamps related to presentation of an encoded audio and visual data and time stamps related to sending of a data stream.

If a subtitle is included in the bitstream, a subtitle decoder 1250 decodes the subtitle, and synchronizes the subtitle with the video frame and the audio frame, and provides the video/audio/subtitle to a video/audio/subtitle display 1280.

This application is not limited to the foregoing system, and either the image encoding device or the image decoding device in the foregoing embodiment may be used in another system, for example, a car.

With reference to the accompanying drawings, the foregoing describes the encoding and decoding system to which this application is applied. The following describes a working flowchart of image processing provided in this application with reference to the accompanying drawings. The image processing process may be performed by an electronic device, and the electronic device includes a decoding module and a processing module. In some possible examples, the electronic device may further include a display module, configured to display an obtained target image.

The decoding module may include any decoder (HEVC, JPEG, ProRes, or HEIF). The decoding module decodes a received bitstream via the decoder, to obtain baseline data, gain map data, and metadata. The baseline data and the gain map data obtained in this process include image data in any color space form like RGB or YUV. It should be noted that a format of the bitstream is not limited in this application. In terms of a color space, the bitstream may be in a format of YUV or RGB. In terms of a bit width of the data, the bitstream may be 8 bits, 10 bits, 12 bits, or the like. In some embodiments, the decoding module may obtain the metadata from SEI of HEVC or VVC, a user-defined NAL unit, or a reserved packet unit, or may obtain the metadata from APP extension information encapsulated in JFIF or a data segment encapsulated in MP4, or may obtain the metadata from another file location, for example, a location after an EOI (end of image) of a complete JPEG file.

It should be noted that the metadata mainly includes a data format or an image feature, conversion information, and the like of a source, and one or more metadata information units. The metadata information unit includes coordinate information, the image feature, the conversion information, and the like.

In some embodiments, the decoding module may obtain the gain map data from the SEI of HEVC or VVC, the user-defined NAL unit, or the reserved packet unit, or may obtain the gain map data from the APP extension information encapsulated in JFIF or the data segment encapsulated in MP4, or may obtain the gain map data from the another file location indicated in the metadata. For example, the gain map data is obtained at the location after the EOI of the complete JPEG file.

The gain map data may be as follows: One pixel value corresponds to one piece of gain map data, or a plurality of pixel values correspond to one piece of gain map data, where the gain map data may include a plurality of values, and quantities of values included in gain map data corresponding to all pixels are the same.

The electronic device may perform different processing on the baseline data and the gain map data via the decoding module or the processing module, to obtain the target image. The following provides descriptions with reference to cases.

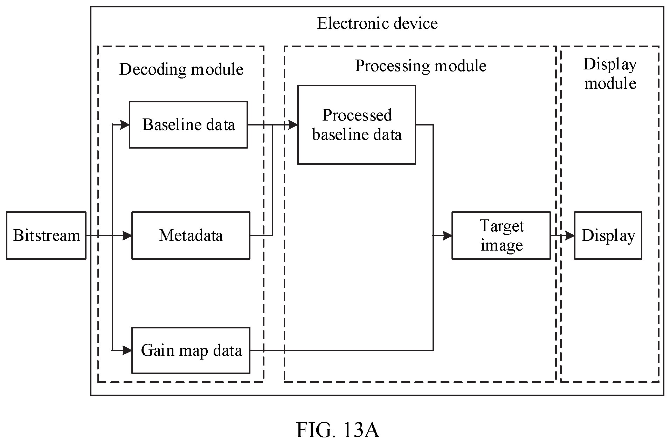

Case 1: FIG. 13A is a schematic flowchart of a first type of image processing according to this application. As shown in FIG. 13A, a decoding module obtains baseline data, gain map data, and metadata from a bitstream via a decoder. A processing module processes the baseline data by using the metadata to obtain processed baseline data, and combines the processed baseline data and the gain map data to obtain a target image. The processing module transmits the target image to a display module for display.

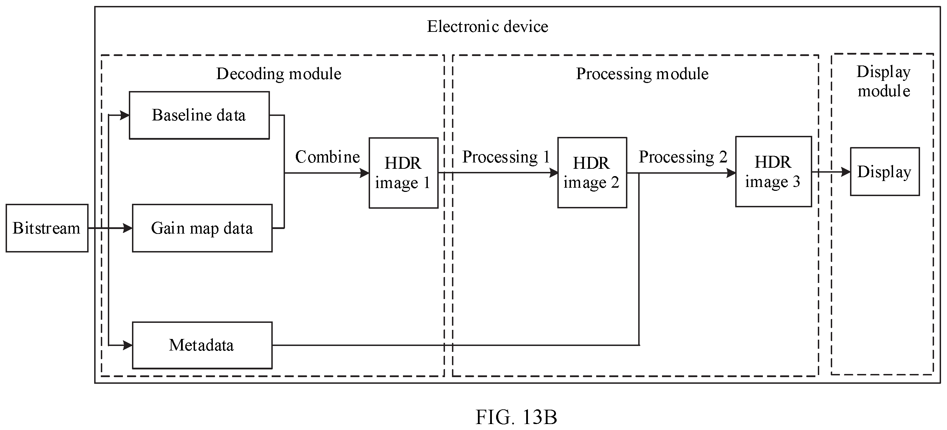

Case 2: FIG. 13B is a schematic flowchart of a second type of image processing according to this application. As shown in FIG. 13B, a decoding module obtains baseline data, gain map data, and metadata from a bitstream via a decoder. The decoding module synthesizes the baseline data and the gain map data to obtain an HDR image (or referred to as an HDR image 1), and transmits the HDR image 1 to a processing module. The processing module performs processing 1 on the HDR image 1 to obtain an HDR image 2. The processing module performs processing 2 on the HDR image 2 by using the metadata to obtain an HDR image 3. The processing module transmits the HDR image 3 to a display module for display.

A dynamic range of the baseline data is less than a dynamic range of the HDR image (that is, the HDR image 1) determined based on the baseline data and the gain map data.

For example, in some embodiments, the baseline data may be an SDR image, and the HDR image 1 is an HDR image. The HDR image and the SDR image differ in at least one of their optical-electro transfer functions, color gamuts, or dynamic ranges.

For another example, in some other embodiments, the baseline data may be an HDR image, but a dynamic range of the HDR image is less than the dynamic range of the HDR image 1.

For example, it is assumed that the dynamic range of the baseline data is DRx1 to DRx2, and the dynamic range of the HDR image 1 is DRy1 to DRy2. In some embodiments, DRy1 is less than DRx1, and DRy2 is greater than DRx2. In some other embodiments, DRy1 is less than DRx1, and DRy2 is equal to DRx2. In some other embodiments, DRy1 is equal to DRx1, and DRy2 is greater than DRx2. In other words, it may be considered that the baseline data is an image whose dynamic range is less than that of the HDR image 1.

In some embodiments, resolution of the baseline data may be 720P, 1080P, 2K, 4K, 8K, or the like.

In some embodiments, resolution of the gain map data may be 720P, 1080P, 2K, 4K, 8K, or the like.

In some embodiments, resolution of the HDR image 1 may be 720P, 1080P, 2K, 4K, 8K, or the like.

In some embodiments, resolution of the HDR image 2 may be 720P, 1080P, 2K, 4K, 8K, or the like.

In some embodiments, resolution of the HDR image 3 may be 720P, 1080P, 2K, 4K, 8K, or the like.

In some embodiments, the resolution of the baseline data may be the same as the resolution of the gain map data. For example, both the resolution of the baseline data and the resolution of the gain map data are 4K.

In some other embodiments, the resolution of the baseline data may be different from the resolution of the gain map data. For example, in some embodiments, the resolution of the baseline data may be greater than the resolution of the gain map data. For example, the resolution of the baseline data may be 4K, and the resolution of the gain map data may be 2K or 1080P. For another example, in some other embodiments, the resolution of the baseline data may be less than the resolution of the gain map data. For example, the resolution of the baseline data may be 1080P or 2K, and the resolution of the gain map data may be 4K.

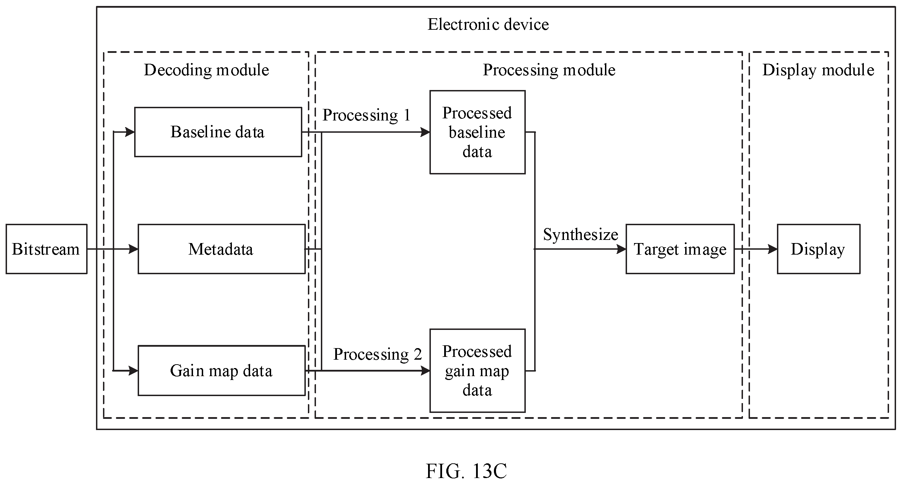

Case 3: FIG. 13C is a schematic flowchart of third type of image processing according to this application. As shown in FIG. 13C, a decoding module obtains baseline data, gain map data, and metadata from a bitstream via a decoder; and a processing module performs processing 1 on the baseline data by using the metadata, to obtain processed baseline data. The processing module performs processing 2 on the gain map data by using the metadata, to obtain processed gain map data. The processing module synthesizes the processed baseline data and the processed gain map data to obtain an HDR image (that is, a target image). The processing module transmits the HDR image to a display module for display.

The foregoing describes, with reference to the accompanying drawings, a procedure of performing image processing by the electronic device provided in this application. In some possible cases, modules deployed on different electronic devices may be further used to implement the foregoing image processing process. The following provides three possible examples.

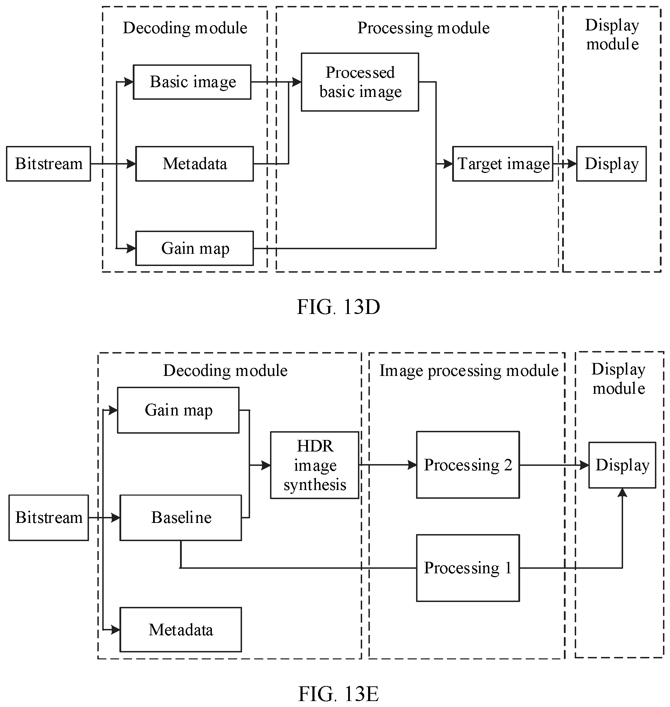

Example 1: FIG. 13D is a schematic flowchart of a fourth type of image processing according to this application.

As shown in FIG. 13D, a decoding module and a processing module cooperate to implement an image processing process to obtain a target image, and a display module displays the target image. The decoding module decodes a received bitstream to obtain a baseline image, a gain map, and metadata. The processing module processes the baseline image by using the metadata to obtain a processed baseline image, and the processing module obtains the target image based on the processed baseline image and the gain map.

Example 2: FIG. 13E is a schematic flowchart of a fifth type of image processing according to this application. As shown in FIG. 13E, a decoding module decodes a received bitstream to obtain a baseline image, a gain map, and metadata, and combines the gain map and the baseline to obtain an HDR image synthesis. An image processing module performs processing 2 on the HDR image synthesis to obtain a processed image 1, and transmits the processed image 1 to a display module. The image processing module performs processing 1 on the baseline to obtain a processed image 2, and transmits the processed image 2 to the display module. The display module receives the processed image 1 and the processed image 2, obtains a target image based on the processed image 1 and the processed image 2, and displays the target image.

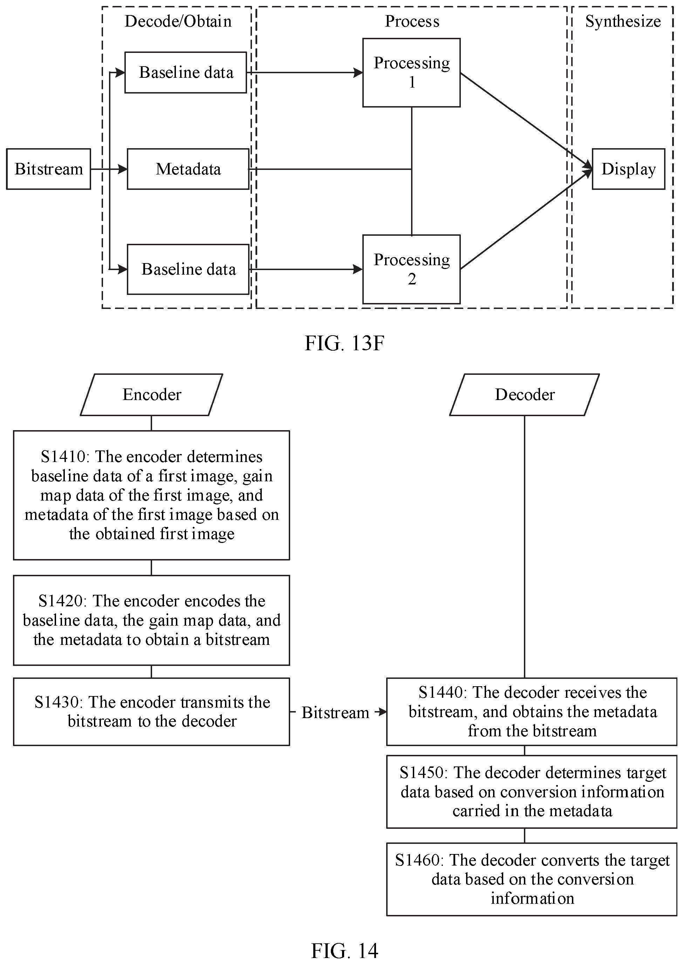

Example 3: FIG. 13F is a schematic flowchart of a sixth type of image processing according to this application. As shown in FIG. 13F, baseline data, metadata, and gain map data are obtained by decoding a bitstream, or the baseline data, the metadata, and the gain map data are directly obtained from the bitstream. Processing 1 is performed on the baseline data to obtain a processed image 1, processing 2 is performed on the gain map data to obtain a processed image 2, the processed image 1 and the processed image 2 are synthesized, and a synthesized image is displayed.

The foregoing describes a general procedure of image processing with reference to the accompanying drawings. The following describes a data processing method according to this application with reference to the accompanying drawing. FIG. 14 is a schematic flowchart of a data processing method according to this application. As shown in FIG. 14, the method includes the following S1410 to S1460.

S1410: An encoder determines baseline data of a first image, gain map data of the first image, and metadata of the first image based on the obtained first image.

The metadata carries conversion information.

In a possible case, the conversion information includes at least one of color mode information, chrominance format information, color gamut information, and color compensation information.

The color mode information includes at least one of color mode information of the baseline data of the first image, color mode information of the gain map data of the first image, and color mode information that is to be transformed and processed and that corresponds to the baseline data of the first image and the gain map data of the first image.

The chrominance format information includes at least one of chrominance format information of the baseline data of the first image, chrominance format information of the gain map data of the first image, and chrominance format information that is to be transformed and processed and that corresponds to the baseline data of the first image and the gain map data of the first image.

The color gamut information includes at least one of color gamut information of the baseline data of the first image, color gamut information of the gain map data of the first image, and color gamut information that is to be transformed and processed and that corresponds to the baseline data of the first image and the gain map data of the first image.

The color compensation information includes at least one of color compensation information of the baseline data of the first image, color compensation information of the gain map data of the first image, and color compensation information that is to be transformed and processed and that corresponds to the baseline data of the first image and the gain map data of the first image.

In a possible case, the conversion information further includes conversion location information and conversion scheme information. The conversion location information indicates a location at which conversion occurs. The conversion scheme information indicates a conversion scheme used when target data is converted. The conversion occurs before or after a second image is obtained, and the second image indicates an image obtained based on the baseline data and the gain map data

Content included in the conversion information varies with a location at which the conversion occurs. The following provides descriptions with reference to cases.

Case A: The conversion occurs before the second image is obtained.

In this case, the conversion information further includes conversion object information. The conversion object information indicates a conversion object on which the conversion scheme needs to be performed. The conversion object includes at least one of the baseline data and the gain map data. For example, the conversion object includes the baseline data, or the conversion object includes the gain map data, or the conversion object includes the baseline data and the gain map data.

Content included in the conversion scheme varies with a conversion object. The following provides descriptions with reference to cases.

Case Aa: The conversion object includes the baseline data.

In this case, the conversion scheme information includes a baseline data conversion scheme. The baseline data conversion scheme indicates to perform at least one of color gamut conversion, chrominance format conversion, color compensation, and color mode conversion on the baseline data. Performing the color gamut conversion on the baseline data may mean performing the color gamut conversion on the baseline data by using the color gamut information that is to be transformed and processed, that corresponds to the baseline data and the gain map data, and that is carried in the metadata, or preset color gamut information. Performing the color mode conversion on the baseline data may mean performing the color mode conversion on the baseline data by using the color mode information that is to be transformed and processed, that corresponds to the baseline data and the gain map data, and that is carried in the metadata, or preset color mode information. Performing the chrominance format conversion on the baseline data may mean performing the color mode conversion on the baseline data by using the chrominance format information that is to be transformed and processed, that corresponds to the baseline data and the gain map data, and that is carried in the metadata, or preset chrominance format information. Performing the color compensation on the baseline data may mean performing the color compensation on the baseline data by using the color compensation information that is to be transformed and processed, that corresponds to the baseline data and the gain map data, and that is carried in the metadata, or preset color compensation information.

The baseline data conversion scheme further indicates a conversion parameter used when the baseline data is converted. The conversion parameter includes at least one of a compensation matrix, a conversion matrix, a conversion function, and a compensation value.

Case Ab: The conversion object includes the gain map data.

In this case, the conversion scheme information includes a gain map data conversion scheme. The gain map data conversion scheme indicates to perform at least one of chrominance format conversion, color mode conversion, and channel conversion on the gain map data.

For related content of the chrominance format conversion and the color mode conversion, refer to the related descriptions in Case Aa. Details are not described herein again. The channel conversion is used to restore a channel of the gain map data to an original channel.

The gain map data conversion scheme further indicates a conversion parameter used when the gain map data is converted. The conversion parameter includes at least one of a conversion matrix, a conversion function, and a channel conversion function.

When the conversion object is the baseline data, an electronic device may convert the baseline data according to the baseline data conversion scheme described in Case Aa. When the conversion object is the gain map data, the electronic device may convert the gain map data according to the gain map data conversion scheme described in Case Ab. In addition, when the conversion object is the baseline data and the gain map data, the electronic device may convert the baseline data according to the baseline data conversion scheme described in Case Aa, and convert the gain map data according to the gain map data conversion scheme described in Case Ab.

Case B: The conversion occurs after the second image is obtained.

In this case, the conversion scheme information includes at least one of color gamut conversion, chrominance format conversion, color compensation, and color mode conversion. For related content of the color gamut conversion, the chrominance format conversion, the color compensation, and the color mode conversion, refer to the foregoing related descriptions. Details are not described herein again.

In a possible case, the conversion scheme information further includes a conversion parameter. The conversion parameter includes at least one of a compensation matrix, a conversion matrix, a conversion function, and a compensation value. For related descriptions of the compensation matrix, the conversion matrix, the conversion function, and the compensation value, refer to the conventional technology. Details are not described herein again.

In a possible case, when the target data includes the baseline data and the gain map data, the conversion information may further include channel combination information. The channel combination information indicates a scheme about how a channel of the baseline data is combined with the channel of the gain map data. A scheme for combining the baseline data and the gain map data varies with a color mode of the baseline data and a color mode of the gain map data. In this case, the channel combination information may indicate a combination scheme of a channel corresponding to the color mode of the baseline data and a channel corresponding to the color mode of the gain map data. The scheme for combining the baseline data and the gain map data varies with the color mode of the baseline data and the color mode of the gain map data. The following separately provides descriptions.

When the color modes of the baseline data and the gain map data are both an RGB mode, the channel combination information indicates that an R channel of the baseline data is combined with an R channel of the gain map data, a G channel of the baseline data is combined with a G channel of the gain map data, and a B channel of the baseline data is combined with a B channel of the gain map data.

When the color mode of the baseline data is the RGB mode and the color mode of the gain map data is a grayscale mode, the channel combination information indicates that the R channel of the baseline data is combined with a grayscale value of the gain map data, the G channel of the baseline data is combined with the grayscale value of the gain map data, and the B channel of the baseline data is combined with the grayscale value of the gain map data.

When the color mode of the baseline data is the grayscale mode and the color mode of the gain map data is the RGB mode, the channel combination information indicates that the R channel of the gain map data is combined with a grayscale value of the baseline data, the G channel of the gain map data is combined with the grayscale value of the baseline data, and the B channel of the gain map data is combined with the grayscale value of the baseline data.

When the color modes of the baseline data and the gain map data are both the grayscale mode, the channel combination information indicates that the grayscale value of the baseline data is combined with the grayscale value of the gain map data.

When the color mode of the baseline data and the color mode of the gain map data are both any one of a YUV mode, a Lab mode, an HSV mode, a YCbCr mode, an ICtCp mode, and the grayscale mode, the channel combination information indicates that a luminance channel of the baseline data is combined with a luminance channel of the gain map data.

When the color modes of the baseline data and the gain map data are both any one of the YUV mode, the Lab mode, the HSV mode, the YCbCr mode, and the ICtCp mode, the channel combination information indicates that the luminance channel of the baseline data is combined with the luminance channel of the gain map data.

When the color mode of the baseline data is the grayscale mode, and the color mode of the gain map data is any one of the YUV mode, the Lab mode, the HSV mode, the YCbCr mode, and the ICtCp mode, the channel combination information indicates that the channel of the baseline data is combined with the luminance channel of the gain map data.

When the color mode of the baseline data is any one of the YUV mode, the Lab mode, the HSV mode, the YCbCr mode, and the ICtCp mode, and the color mode of the gain map data is the grayscale mode, the channel combination information indicates that the luminance channel of the baseline data is combined with the channel of the gain map data.

There may include a plurality of manners of combining the channels. The plurality of manners may be preset, or may be carried in the metadata. The following provides several possible manners of combining the channels.

Manner 1: The channel of the baseline data and the channel of the gain map data are directly multiplied.

In this case, a decoder may combine the channel of the baseline data and the channel of the gain map data by using Formula (6).

$$newPictue[i]=Base[i]*Enhance[i] \quad \text{Formula (6)}$$

Herein, newPictue[i] indicates a combined image, Base[i] indicates the baseline data, and Enhance[i] indicates the gain map data.

Manner 2: The channel of the baseline data and the channel of the gain map data are directly added.

In this case, a decoder may combine the channel of the baseline data and the channel of the gain map data by using Formula (7).

$$newPictue[i]=Base[i]+Enhance[i] \quad \text{Formula (7)}$$

Herein, newPictue[i] indicates a combined image, Base[i] indicates the baseline data, and Enhance[i] indicates the gain map data.

Manner 3: The channel of the baseline data and a processed channel of the gain map data are directly multiplied.

In this case, a decoder may combine the channel of the baseline data and the channel of the gain map data by using Formula (8).

$$newPictue[i]=Base[i]*f(Enhance[i]) \quad \text{Formula (8)}$$

Herein, newPictue[i] indicates a combined image, Base[i] indicates the baseline data, Enhance[i] indicates the gain map data, and f() is a numeric domain conversion function.

Manner 4: The channel of the baseline data and a processed channel of the gain map data are directly added.

In this case, a decoder may combine the channel of the baseline data and the channel of the gain map data by using Formula (9).

$$newPictue[i]=Base[i]+f(Enhance[i]) \quad \text{Formula (9)}$$

Herein, newPictue[i] indicates a combined image, Base[i] indicates the baseline data, Enhance[i] indicates the gain map data, and f() is a numeric domain conversion function.

Manner 5: The channel of the baseline data and a channel that is of the gain map data and on which first processing is performed are directly multiplied, and second processing is performed on an obtained result.

In this case, a decoder may combine the channel of the baseline data and the channel of the gain map data by using Formula (10).

$$newPictue[i]=g(Base[i]*f(Enhance[i])) \quad \text{Formula (10)}$$

Herein, newPictue[i] indicates a combined image, Base[i] indicates the baseline data, Enhance[i] indicates the gain map data, f() is a numeric domain conversion function, and g() is a mapping function.

Manner 6: The channel of the baseline data and a channel that is of the gain map data and on which first processing is performed are directly added, and second processing is performed on an obtained result.

In this case, a decoder may combine the channel of the baseline data and the channel of the gain map data by using Formula (11).

$$newPictue[i]=g(Base[i]+f(Enhance[i])) \quad \text{Formula (11)}$$

Herein, newPictue[i] indicates a combined image, Base[i] indicates the baseline data, Enhance[i] indicates the gain map data, f() is a numeric domain conversion function, and g() is a mapping function.

Based on an actual application requirement, the numeric domain conversion function f() and the mapping function g() in Manner 1 to Manner 6 each may be any function. This is not limited in this application. For example, f(x)=x, and g(x)=x.

The following specifically describe the scheme of combining the channel of the baseline data and the channel of the gain map data by using an example in which manners of combining the channels are multiplication described in Manner 1 and addition described in Manner 2. The manner of combining the channels may be another combination manner, for example, the manner described in Manner 3 to Manner 6. Based on an actual application requirement, the manner of combining the channels may alternatively be a manner other than Manner 1 to Manner 6. This is not limited in this application.

A manner of combining the channels varies with a quantity of channels of the baseline data and a quantity of channels of the gain map data. The following separately provides descriptions.

Case 1: The baseline data is a single channel, and the gain map data is a single channel.

In this case, the channel combination information indicates a scheme of combining the single channel of the baseline data and the single channel of the gain map data in the foregoing described manner of combining the channels. For example, the channel of the baseline data and the channel of the gain map data are directly combined. For example, combination processing is the manner provided in Example 1 and Example 2. Content indicated by the channel combination information may be content in Table 1.

Table 1

| Channel of an image 1 | Channel of an image 2 | Channel combination information |
|---|---|---|
| Channel C1 of the image 2 | Channel C2 of the image 2 | (C1+C2)/C1*C2 |

When the image 1 is the baseline data, the image 2 may be the gain map data. Alternatively, when the image 1 is the gain map data, the image 2 is the baseline data.

Case 2: The baseline data is a plurality of channels, and the gain map data is a single channel.

In this case, a channel combination scheme indicated by the channel combination information varies with the color mode of the baseline data.

(1) The baseline data is in a color mode in which luminance and chrominance are not separated.

In this case, the channel combination information indicates that the channel of the gain map data is combined with the channels of the baseline data. For example, the baseline data is in the RGB mode. Content indicated by the channel combination information may be content in Table 2.

Table 2

| Channel of an image 1 | Channel of the image 1 | Channel combination information |
|---|---|---|
| Channels (R, G, and B) of the image 1 | Channel C of an image 2 | (R+C, G+C, B+C)/(R*C, G*C, B*C) |

When the image 1 is the baseline data, the image 2 may be the gain map data.

(2) The baseline data is in a color mode in which luminance and chrominance are separated.

In this case, channel combination schemes indicated by the channel combination information are different depending on whether the channel of the gain map data is used to perform enhancement processing on a channel (for example, a chrominance channel or a hue channel) other than a luminance channel of the baseline data.

1. The channel of the gain map data is used to process the channel other than the luminance channel of the baseline data.

In this case, the channel combination information indicates that the channel of the gain map data is combined with the luminance channel and at least one other channel other than the luminance channel of the baseline data.

For example, the channel combination information indicates that the channel of the gain map data is combined with each channel of the baseline data. For example, the baseline data is in the YUV mode, and the channel of the gain map data is C. The channel combination information indicates that the channel C of the gain map data is combined with a Y channel, a U channel, and a V channel of the baseline data, which may be represented by using content corresponding to a row with a sequence number 1 in Table 3.

For another example, the channel combination information indicates that the channel of the gain map data is combined with the luminance channel and the chrominance channel of the baseline data. For example, the baseline data is in the YUV mode, and the channel of the gain map data is C. The channel combination information indicates that the channel C of the gain map data is combined with the Y channel and the U channel of the baseline data, which may be represented by using content corresponding to a row with a sequence number 2 in Table 3.

2. The channel of the gain map data is used to process the luminance channel of the baseline data.

The channel combination information indicates that the channel of the gain map data is combined with the luminance channel of the baseline data. For example, the baseline data is in the YUV mode, and the channel of the gain map data is C. In this case, content indicated by the channel combination information may be content corresponding to a row with a sequence number 3 in Table 3.

Table 3

| Sequence number | Channel of an image 1 | Channel of an image 2 | Channel combination information |
|---|---|---|---|
| 1 | Channels (Y, U, and V) of the image 1 | Channel C of the image 2 | (Y+C, U+C, V+C)/(Y*C, U*C, V*C) |
| 2 | Channels (Y, U, and V) of the image 1 | Channel C of the image 2 | (Y+C, U+C, V+0)/(Y*C, U*C, V*1) |
| 2 | Channels (Y, U, and V) of the image 1 | Channel C of the image 2 | (Y+C, U+0, V+0)/(Y*C, U*1, V*1) |

When the image 1 is the baseline data, the image 2 may be the gain map data.

Case 3: The baseline data is a plurality of channels, and the gain map data is a plurality of channels.

In this case, the baseline data and the gain map data may both be in a color mode in which luminance and chrominance are separated; or neither the baseline data nor the gain map data may be in a color mode in which luminance and chrominance are not separated; or one of the baseline data and the gain map data may be in a color mode in which luminance and chrominance are separated, and the other may not be in a color mode in which luminance and chrominance are separated. Channel combination information is different in different cases, which are separately described below.

(1) Neither the baseline data nor the gain map data is in the mode in which luminance and chrominance are not separated.

The baseline data and the gain map data may be in a same color mode, or may be in two different color modes. The following separately provides examples for description.

1. The baseline data and the gain map data are in the same color mode.

In this case, the channel combination information indicates that at least one channel of the gain map data is combined with a corresponding channel of the baseline data. For example, the channel combination information indicates that each channel of the gain map data is combined with a corresponding channel of the baseline data, and the baseline data and the gain map data are both in the RGB mode, both in an RGBA mode, or both in a CMYK mode. In this case, content indicated by the channel combination information may be content in Table 4.

Table 4

| Channel of an image 1 | Channel of an image 2 | Channel combination information |
|---|---|---|
| Channels (R, G, and B) of the image 1 | Channels (R, G, and B) of the image 2 | (R+R, G+G, B+B)/(R*R, G*G, B*B) |
| Channels (R, G, B, and A) of the image 1 | Channels (R, G, B, and A) of the image 2 | (R+R, G+G, B+B, A+A)/(R*R, G*G, B*B, A*A) |
| Channels (C, M, Y, and K) of the image 1 | Channels (C, M, Y, and K) of the image 2 | (C+C, M+M, Y+Y, K+K)/(C*C, M*M, Y*Y, K*K) |

When the image 1 is the baseline data, the image 2 may be the gain map data.

The foregoing uses an example in which each channel of the baseline data is combined with a corresponding channel of the gain map data. In some possible cases, the channel combination information may further indicate that a part of channels of the gain map data are combined with corresponding channels of the baseline data.

For example, the baseline data and the gain map data are in the RGBA mode, and the channel combination information indicates that the R channel of the baseline data is combined with the R channel of the gain map data, the G channel of the baseline data is combined with the G channel of the gain map data, and the B channel of the baseline data is combined with the R channel of the gain map data.

2. The baseline data and the gain map data are in two different color modes.

In this case, the channel combination information indicates that each channel of the gain map data is combined with a corresponding channel of the baseline data. For example, the baseline data is in the RGB mode, and the gain map data is in an RGBA mode. In this case, content indicated by the channel combination information may be content in Table 5.

Table 5

| Channel of an image 1 | Channel of an image 2 | Channel combination information |
|---|---|---|
| Channels (R, G, and B) of the image 1 | Channels (R, G, B, and A) of the image 2 | (R+R, G+G, B+B)/(R*R, G*G, B*B) |

When the image 1 is the baseline data, the image 2 may be the gain map data. Alternatively, when the image 1 is the gain map data, the image 2 is the baseline data.

(2) The baseline data and the gain map data are both in the color mode in which luminance and chrominance are separated.

The channel combination information indicates at least one of combining a luminance channel of the gain map data with the luminance channel of the baseline data, and combining a chrominance channel of the gain map data with a chrominance channel of the baseline data.

1. The baseline data and the gain map data are in a same color mode.

In this case, the channel combination information may indicate that the luminance channel of the gain map data is combined with the luminance channel of the baseline data. For example, the color modes of the baseline data and the gain map data are both in the YUV mode, both in the Lab mode, or both in the HSV mode, and the channel combination information indicates that only the luminance channel of the gain map data is combined with the luminance channel of the baseline data. In this case, the channel combination information may be represented by using content in Table 6.

Table 6

| Channel of an image 1 | Channel of an image 2 | Channel combination information |
|---|---|---|
| Channels (Y, U, and V) of the image 1 | Channels (Y, U, and V) of the image 2 | (Y+Y, U+0, V+0)/(Y*Y, U*1, V*1) |
| Channels (L, a, and b) of the image 1 | Channels (L, a, and b) of the image 2 | (L+L, a+0, b+0)/(L*L, a*1, b*1) |
| Channels (H, S, and V) of the image 1 | Channels (H, S, and V) of the image 2 | (H+0, S+0, V+V)/(H*1, S*1, V*V) |

The foregoing uses an example in which the channel combination information indicates that the luminance channel of the gain map data is combined with the luminance channel of the baseline data. In some possible cases, the channel combination information may further indicate that the luminance channel of the gain map data and at least one channel of other channels are combined with corresponding channels of the baseline data.

For example, the color modes of the baseline data and the gain map data are both in the YUV mode, and the channel combination information may indicate that a Y channel of the gain map data is combined with a Y channel of the baseline data, a U channel of the gain map data is combined with a U channel of the baseline data, and a V channel of the gain map data is combined with a V channel of the baseline data.

For another example, the color modes of the baseline data and the gain map data are both in the Lab mode, and the channel combination information may indicate that an L channel of the gain map data is combined with an L channel of the baseline data, an a channel of the gain map data is combined with an a channel of the baseline data, and a b channel of the gain map data is combined with a b channel of the baseline data.

For still another example, the color modes of the baseline data and the gain map data are both in the HSV mode, and the channel combination information may indicate that an H channel of the gain map data is combined with an H channel of the baseline data, an S channel of the gain map data is combined with an S channel of the baseline data, and a V channel of the gain map data is combined with a V channel of the baseline data.

2. The baseline data and the gain map data are in two color modes.

For example, the baseline data is in the YUV mode, and the gain map data is in the Lab mode. For another example, the baseline data is in the HSV mode, and the gain map data is in the Lab mode. For still another example, the baseline data is in the YUV mode, and the gain map data is in the HSV mode. In this case, the color modes of the baseline data and the gain map data need to be converted, and the channels of the baseline data and the gain map data need to be combined after the color mode conversion. For example, the color mode of the baseline data and the color mode of the gain map data are both converted into the RGB mode, to obtain converted baseline data in the RGB mode and converted gain map data in the RGB mode. In this case, the converted baseline data and the converted gain map data may be combined by using the channel combination information corresponding to the sequence number 1 in Table 4. (3) One of the baseline data and the gain map data is in the color mode in which luminance and chrominance are separated, and the other is not in the color mode in which luminance and chrominance separated.

In this case, the channel combination information indicates that the color mode conversion is performed on at least one of the baseline data and the gain map data by using the conversion information, and channel combination is performed on converted data in the manner described in (1) and (2) above. For same content of the channel combination information of the baseline data and the gain map data after the conversion, refer to the related descriptions in (1) and (2) above. Details are not described herein again.

S1420: The encoder encodes the baseline data, the gain map data, and the metadata to obtain a bitstream.

The metadata may be used to define an aspect ratio Aspect ratio of an image. Resolution of the image may not represent the aspect ratio. If pixel distribution is not spatially uniform at a display side, that is, a horizontal distance between pixels is different from a vertical distance between the pixels, this may lead to phase errors in different interpolation algorithms. For example, actual distances between adjacent horizontal and vertical pixels with a phase difference of 1/2 are different. The metadata is used to determine an actual value range of the stored image, or upper and lower limits of a dynamic range. For example, when an HDR picture is read during picture input and output, a bit width may be 10 bits, but the picture is in a limited range. As stipulated in documents such as BT.2020, in the limited range, luma ranges from 64 to 940 and chroma ranges from 64 to 960 (for 10 bits). In an instance, upper and lower limits of the bit width should be indicated by the metadata. A larger bit width of the gain map data or a baseline image should be used. Correspondingly, in a full range, both luma and chroma range from 0 to 1023 for 10 bits.

S1430: The encoder transmits the bitstream to the decoder.

Corresponding to S1430, the decoder performs S1440. S1440: The decoder receives the bitstream, and obtains the metadata from the bitstream.

S1450: The decoder determines the target data based on the conversion information carried in the metadata.

The metadata is metadata of the first image, and the target data includes the baseline data of the first image and/or the gain map data of the first image. Alternatively, the target data includes the second image.

The decoder determines the target data based on the conversion location information of the conversion information carried in the metadata.

(1) If the conversion location information indicates that the conversion occurs after the second image is obtained, the decoder determines that the target data is the second image.

(2) If the conversion location information indicates that the conversion occurs before the second image is obtained, the decoder determines that the target data is at least one of the baseline data and the gain map data. In this case, the decoder further determines, based on the conversion object information of the conversion information carried in the metadata, that the conversion object is the baseline data, the gain map data, or the baseline data and the gain map data.

S1460: The decoder converts the target data based on the conversion information.

A process of converting the target data by the decoder varies with the target data. The following provides descriptions with reference to cases.

In a first possible case, the target data is the baseline data.

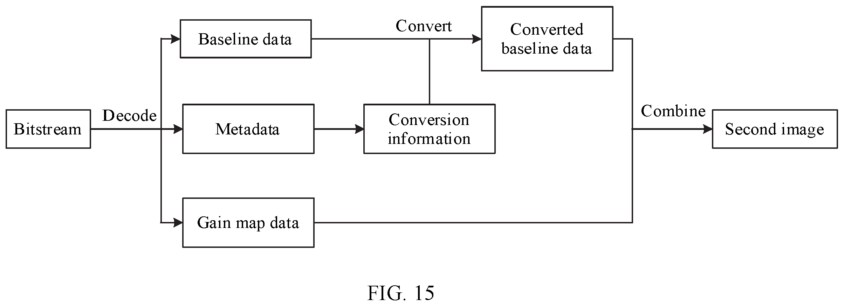

FIG. 15 is a diagram of a first conversion process according to this application. As shown in FIG. 15, a decoder converts baseline data based on conversion information in metadata, to obtain converted baseline data. The conversion may include but is not limited to: color compensation, color gamut conversion, chrominance format conversion, and color mode conversion. The decoder converts color gamut information, a chrominance format, and a color mode of the baseline data based on color gamut information, a chrominance format, and a color mode in a process in which the baseline data and gain map data, that are carried in the metadata, are combined for processing. The following describes a conversion process of the baseline data by the decoder.

(1) For the color compensation

The decoder may perform the color compensation on the baseline data by using a compensation matrix, a compensation value, and the like, to obtain baseline data on which the compensation is performed. The compensation matrix, the compensation value, and the like may be preset, or may be carried in the metadata. This is not limited in this application. For example, the decoder performs the color compensation on the baseline data by using the compensation value carried in the metadata, to obtain the baseline data on which the color compensation is performed.

(2) For the color gamut conversion

The color gamut information of the baseline data is first color gamut information, and the color gamut information in the process in which the baseline data and the gain map data are combined for processing is second color gamut information. The color gamut information may be BT.2020, DCI-P3, Rec.709, NTSC, Rec.2020, or the like. The decoder processes the color gamut information of the baseline data in different manners depending on whether the first color gamut information is the same as the second color gamut information. The following separately provides descriptions.

1. The first color gamut information is the same as the second color gamut information.

In this case, the decoder may not convert the color gamut information of the baseline data, or perform identity transform on the color gamut information of the baseline data. A manner in which the decoder performs the identity transform on the color gamut information of the baseline data may be carried by the metadata, or may be preset.

2. The first color gamut information is different from the second color gamut information.

In this case, the decoder converts, based on the color gamut information (or referred to as the first color gamut information) of the baseline data and the color gamut information (or referred to as the second color gamut information) in the process in which the baseline data and the gain map data are combined for processing, the color gamut information (that is, the first color gamut information) of the baseline data into the color gamut information (that is, the second color gamut information) in the process in which the baseline data and the gain map data are combined for processing. The second color gamut information may be preset color gamut information, or may be color gamut information carried in the metadata. The decoder may convert the color gamut information of the baseline data from the first color gamut information to the second color gamut information in a plurality of manners, for example, a conversion matrix and a conversion function. The conversion matrix or the conversion function may be default, or may be carried in the metadata. This is not limited in this application. For example, the decoder converts the color gamut information of the baseline data from the first color gamut information to the second color gamut information by using a 3*3 conversion matrix carried in the metadata.

(3) For the chrominance format conversion

The chrominance format of the baseline data is a first chrominance format, and the chrominance format in the process in which the baseline data and the gain map data are combined for processing is a second chrominance format. The chrominance format may be R:G:B, YUV4:2:0, YUV4:4:4, YUV4:2:2, or the like. The decoder processes the chrominance format of the baseline data in different manners depending on whether the first chrominance format is the same as the second chrominance format. The following separately provides descriptions.

1. The first chrominance format is the same as the second chrominance format.

In this case, the decoder may not convert the chrominance format of the baseline data, or perform identity transform on the chrominance format of the baseline data. A manner in which the decoder performs the identity transform on the chrominance format of the baseline data may be carried by the metadata, or may be preset.

2. The first chrominance format is different from the second chrominance format.

The decoder converts, based on the chrominance format (or referred to as the first chrominance format) of the baseline data and the chrominance format (or referred to as the second chrominance format) in the process in which the baseline data and the gain map data are combined for processing, the chrominance format (that is, the first chrominance format) of the baseline data into the chrominance format (that is, the second chrominance format) in the process in which the baseline data and the gain map data are combined for processing. The second chrominance format may be a preset chrominance format, or may be a chrominance format carried in the metadata.

A manner of converting the chrominance format by the decoder varies with the chrominance format of the baseline data and the chrominance format in the process in which the baseline data and the gain map data are combined for processing. The following separately provides descriptions.

Manner 1: If the first chrominance format is YUV4:2:0 or YUV4:2:2, the second chrominance format is R:G:B. The decoder needs to perform two conversions on the chrominance format of the baseline data, so that a chrominance format, obtained through the two chrominance conversions, of the baseline data is the same as a chrominance format of the gain map data and is R:G:B. The first conversion performed by the decoder on the chrominance format of the baseline data is: converting the chrominance format of the baseline data from YUV4:2:0 or YUV4:2:2 to YUV4:4:4. The second conversion performed by the decoder on the chrominance format of the baseline data is: converting the chrominance format, obtained through the first conversion, of the baseline data from YUV4:4:4 to R:G:B. The decoder may convert the chrominance format of the baseline data from YUV4:2:0 or YUV4:2:2 to YUV4:4:4 in a plurality of manners. For example, the decoder converts the chrominance format of the baseline data from YUV4:2:0 or YUV4:2:2 to YUV4:4:4 in an upsampling manner. The decoder may convert the chrominance format of the baseline data from YUV4:4:4 to R:G:B in a plurality of manners, for example, a conversion matrix and a conversion function. The conversion matrix, the conversion function, and the like may be preset, or may be carried in the metadata. This is not limited in this application.

Manner 2: If the first chrominance format is YUV4:4:4, the second chrominance format is R:G:B. The decoder performs one conversion on the chrominance format of the baseline data, so that a converted chrominance format of the baseline data is the same as the chrominance format of the gain map data and is R:G:B. The decoder may convert the chrominance format of the baseline data from YUV4:4:4 to R:G:B in a plurality of manners, for example, a conversion matrix and a conversion function. A conversion process in this case is the same as the conversion process in Manner 1.

Manner 3: If the first chrominance format is R:G:B, the second chrominance format is YUV4:2:0 or YUV4:2:2. The decoder needs to perform two conversions on the chrominance format of the baseline data, so that a chrominance format, obtained through the two chrominance conversions, of the baseline data is the same as a chrominance format of the gain map data and is YUV4:2:0 or YUV4:2:2. The first conversion performed by the decoder on the chrominance format of the baseline data is: converting the chrominance format of the baseline data from R:G:B to YUV4:4:4. The second conversion performed by the decoder on the chrominance format of the baseline data is: converting the chrominance format, obtained through the first conversion, of the baseline data from YUV4:4:4 to YUV4:2:0 or YUV4:2:2. The decoder may convert the chrominance format of the baseline data from R:G:B to YUV4:4:4 in a plurality of manners, for example, a conversion matrix and a conversion function. A conversion process in this case is an inverse process of the conversion process in Manner 1. The decoder may convert the chrominance format of the baseline data from YUV4:4:4 to YUV4:2:0 or YUV4:2:2 in a plurality of manners. For example, the decoder converts the chrominance format of the baseline data from YUV4:4:4 to YUV4:2:0 or YUV4:2:2 in a downsampling manner.

Manner 4: If the first chrominance format is R:G:B, the second chrominance format is YUV4:4:4. The decoder performs one conversion on the chrominance format of the baseline data, so that a converted chrominance format of the baseline data is the same as the chrominance format of the gain map data and is YUV4:4:4. The decoder may convert the chrominance format of the baseline data from R:G:B to YUV4:4:4 in a plurality of manners, for example, a conversion matrix and a conversion function. A conversion process in this case is an inverse process of the conversion process in Manner 1.

(4) For the color mode conversion

The color mode of the baseline data is a first color mode, and the color mode in the process in which the baseline data and the gain map data are combined for processing is a second color mode. The color mode may be RGB, YUV, Lab, HSV, RGBA, CMYK, or the like. The decoder processes the color mode of the baseline data in different manners depending on whether the first color mode is the same as the second color mode. The following separately provides descriptions.

1. The first color mode is the same as the second color mode.

In this case, the decoder may not convert the color mode of the baseline data.

2. The first color mode is different from the second color mode.

The decoder converts, based on the color mode (or referred to as the first color mode) of the baseline data and the color mode (or referred to as the second color mode) in the process in which the baseline data and the gain map data are combined for processing, the color mode (that is, the first color mode) of the baseline data into the color mode (that is, the second color mode) in the process in which the baseline data and the gain map data are combined for processing. The second color mode may be a preset color mode, or may be a color mode carried in the metadata. The decoder may convert the color mode of the baseline data from the first color mode to the second color mode in a plurality of manners, for example, a conversion matrix and a conversion function. This is not limited in this application. For example, the decoder converts the color mode of the baseline data from the first color mode to the second color mode by using a 3*3 conversion matrix carried in the metadata.

In a second possible case, the target data is the gain map data.

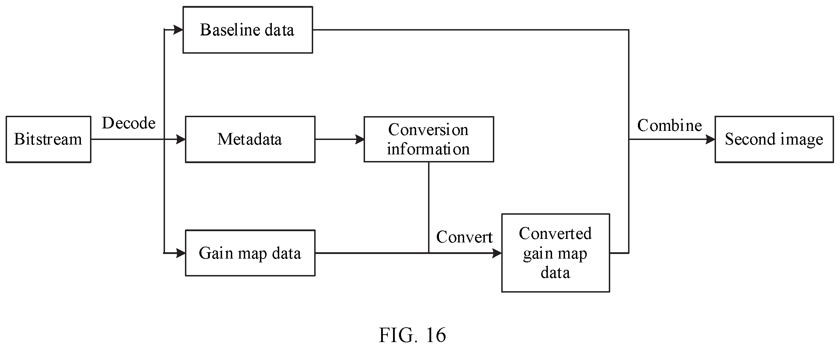

FIG. 16 is a diagram of a second conversion process according to this application. As shown in FIG. 16, a decoder converts gain map data based on conversion information in metadata, to obtain converted gain map data. The conversion may include but is not limited to: color compensation, color gamut conversion, chrominance format conversion, and color mode conversion. Methods for performing the color compensation, the color gamut conversion, the chrominance format conversion, and the color mode conversion on the gain map data by the decoder are respectively the same as the methods for performing the color compensation, the color gamut conversion, the chrominance format conversion, and the color mode conversion in the foregoing first possible case. For related descriptions, refer to the foregoing descriptions. Details are not described herein again.

In a third possible case, the target data is the baseline data and the gain map data.

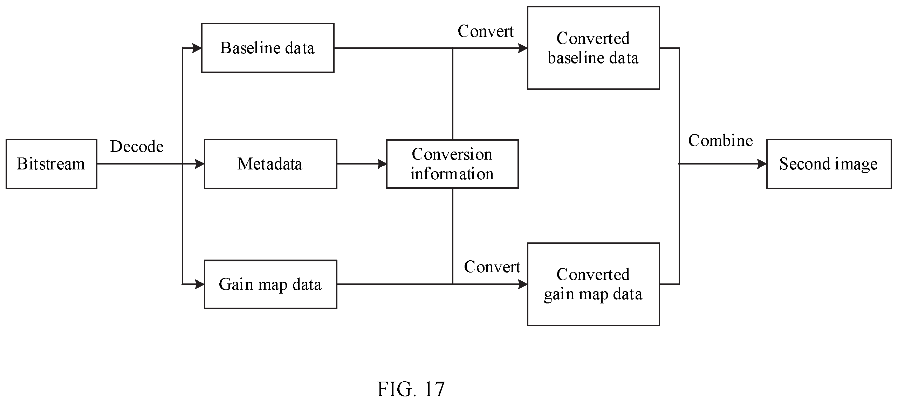

FIG. 17 is a diagram of a third conversion process according to this application. As shown in FIG. 17, a decoder converts both baseline data and gain map data based on conversion information in metadata, to obtain converted baseline data and converted gain map data. For a method for converting the baseline data by the decoder, refer to the related descriptions in the foregoing first possible case. For a method for converting the gain map data by the decoder, refer to the related descriptions in the foregoing second possible case. Details are not described herein again.

In a fourth possible case, the target data is the second image.

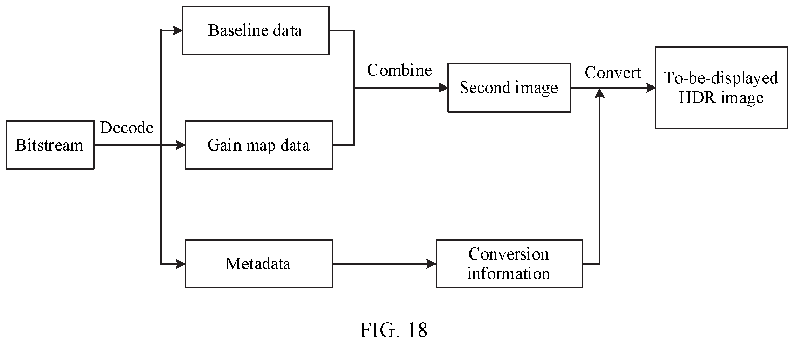

FIG. 18 is a diagram of a fourth conversion process according to this application. As shown in FIG. 18, a decoder converts a second image based on conversion information carried in metadata, to obtain a converted second image. The conversion may include but is not limited to: color compensation, color gamut conversion, chrominance format conversion, and color mode conversion. Different from the foregoing descriptions, the decoder converts color information, color gamut information, a chrominance format, and a color mode of the second image based on color information, color gamut information, a chrominance format, and a color mode that are used in a display process and that are carried in the metadata. A method for converting the color information, the color gamut information, the chrominance format, and the color mode of the second image by the decoder is the same as the method for performing the color compensation, the color gamut conversion, the chrominance format conversion, and the color mode conversion in the foregoing first possible case. For related descriptions, refer to the foregoing descriptions. Details are not described herein again.

In some possible cases, the decoder may further map at least one of baseline data, converted baseline data, gain map data, converted gain map data, the second image, and the converted second image. The decoder may process at least one of the baseline data, the converted baseline data, the gain map data, the converted gain map data, the second image, and the converted second image in a plurality of manners. The processing manner may be preset, or may be carried in the metadata. This is not limited in this application. The processing manner may include but is not limited to normalization, inverse normalization, adding an offset, reducing an offset, multiplying by a coefficient, and the like. The following describes several processing manners by using an example in which the decoder processes data to obtain processed dataAfter. The data indicates at least one of the baseline data, the converted baseline data, the gain map data, the converted gain map data, the second image, and the converted second image.

Manner 1: Identity transform. The decoder may perform the identity transform on the data by using Formula (12).

$$dataAfter[i] = data[i] \quad \text{Formula (12)}$$

Herein, dataAfter[i] is an iamge obtained through the identity transform, and data[i] is an image obtained before transform.

Manner 2: If the metadata carries an upper limit THH and a lower limit THL of the data, the decoder may process the data by using Formula (13).

$$dataAfter[i] = data[i] * THH + (A - data[i]) * THL \quad \text{Formula (13)}$$

Herein, dataAfter[*i*] is a result obtained through processing, data[i] is an image obtained before processing, A is a maximum value of the stored data, and when data is normalized to a range from 0 to 1.0, A is 1.0.

Manner 3: If the metadata carries an upper limit THH and a lower limit THL of the data, the data may be nonlinearly encoded data like PQ/HLG/LOG/Gamma encoded data, data[i] is first converted to a linear domain, and then data[i] converted to the linear domain is processed by using Formula (13).

Manner 4: If the metadata carries a lower limit THL of the data, the decoder may process the data by using Formula (14).

$$\text{dataAfter[i]} = \text{data[i]} + \text{THL} \quad \text{Formula (14)}$$

Herein, dataAfter [*i*] is a result obtained through processing, and data[i] is an image obtained before processing.

Manner 5: If the metadata carries an upper limit THH of the data, the decoder may process the data by using Formula (15).

$$\text{dataAfter[i]} = \text{THH} + A - \text{data[i]} \quad \text{Formula (15)}$$

Herein, dataAfter[i] is a result obtained through processing, data[i] is an image obtained before processing, A is a maximum value of the stored data, and when data is normalized to a range from 0 to 1.0, A is 1.0.

Manner 6: If the metadata includes a parameter for processing, the decoder may obtain a processing manner TME() based on the parameter, and process the data by using Formula (16).

$$\text{dataAfter[i]} = \text{TME}(\text{data[i]}) \quad \text{Formula (16)}$$

Herein, dataAfter[i] is a result obtained through processing, and data[i] is an image obtained before processing. The processing manner TME() may have various forms, such as a sigmoid, a cubic spline, gamma, a straight line, a segmented curve, or an inverse function thereof. This is not limited in this application. For example, the processing manner TME() is a curve represented by Formula (17) or an inverse curve of the curve.

$$L' = F(L) = a \times \left( \frac{p \times L^n}{(p-1) \times L^n + 1} \right)^m + b \quad \text{Formula (17)}$$

Herein, L and L' may be normalized optical signals or electrical signals, a, b, p, and m are all optical-electrical transfer coefficients, a is equal to 1.12762, b is equal to -0.12762, p is equal to 2.3, m is equal to 0.14, and n is a specified parameter. The processing manner may alternatively be a transform in a neural network form. In this case, the decoder may construct a neural network based on historical data (for example, historical gain map data, historical converted gain map data, historical baseline data, and historical converted baseline data), and obtain, by using the neural network, a rule for processing the gain map data, the converted gain map data, the baseline data, the converted baseline data, and the like.

Manner 7: If the metadata includes a parameter for processing, the decoder may obtain a processing manner TME() based on the parameter, and process the data by using Formula (18).

$$\text{dataAfter[i]} = \text{TME}() * \text{data[i]} \quad \text{Formula (18)}$$

Herein, dataAfter [*i*] is a result obtained through processing, and data[i] is an image obtained before processing.

In Manner 1 to Manner 7, i may be a coordinate point. For example, for any coordinate point A (x, y) in a two-dimensional image, i is a coordinate point of the coordinate point A in a one-dimensional image after the two-dimensional image is changed to the one-dimensional image.

In a possible case, if target data includes the baseline data and the gain map data, the decoder may further combine channels of the baseline data and the gain map data based on channel combination information. The channel combination information indicates information about how a channel of the baseline data is combined with a channel of the gain map data. The baseline data may have a plurality of channels. The gain map data may have a single channel or a plurality of channels. The channel combination information may be preset, or may be carried in the metadata. The baseline data and the gain map data may be images directly obtained by the decoder by parsing a bitstream, or may be images obtained by the decoder by performing conversion by using the conversion information, or may be images obtained by the decoder by processing images obtained by parsing the bitstream. This is not limited in this application.

A quantity of channels included in an image may vary with a color mode. For example, a YUV color mode includes three channels: Y, U, and V, a grayscale color mode includes only one channel, and a CMYK color mode includes four channels. A manner in which the decoder combines the channels of the baseline data and the gain map data varies with quantities of channels included in the baseline data and the gain map data. The following separately provides descriptions.

Case 1: Both the baseline data and the gain map data are single channels.

In this case, the decoder may combine, based on the channel combination information described in Case 1, the channel of the baseline data and the channel of the gain map data. For example, the channel of the baseline data and the channel of the gain map data are directly added or multiplied.

Case 2: The baseline data includes a plurality of channels, and the gain map data includes a single channel.

In this case, the decoder may combine, based on the channel combination information described in Case 2, the channels of the baseline data and the channel of the gain map data. The decoder combines the channels of the baseline data and the channel of the gain map data in different manners depending on whether a color mode of the baseline data is a mode in which luminance and chrominance are separated. The following separately provides descriptions.

1. For a case in which the color mode of the baseline data is a color mode in which luminance and chrominance are not separated

In this case, the decoder combines the single channel of the gain map data with each channel of the baseline data based on the channel combination information described in (1) in Case 2, to obtain an image in which the channels are combined. For example, the color mode of the baseline data is RGB, and the gain map data is a single-channel image C. In this case, the decoder performs R+C, G+C, and B+C, or R*C, G*C, and B*C, to combine the channels of the baseline data and the channel of the gain map data.

2. For a case in which the color mode of the baseline data is a color mode in which luminance and chrominance are separated

In this case, the decoder may combine the single channel of the gain map data with a luminance channel of the baseline data based on the channel combination information described in (2) in Case 2, to obtain an image in which the channels are combined. For example, the baseline data is a three-channel image (such as YUV, Lab, or HSV) in which luminance and chrominance are separated, and the gain map data is a single-channel image C. The decoder combines the baseline data and the gain map data based on the channel combination information described in 1 in (2). In this case, the decoder performs Y*C, U*C, and V*C or Y+C, U+C, and V+C, to combine the channels of the baseline data and the channel of the gain map data. The decoder combines the baseline data and the gain map data based on the channel combination information described in 2 in (2). In this case, the decoder performs Y*C, U* 1, and V*1 or Y+C, U+0, and V+0, to combine the channels of the baseline data and the channel of the gain map data.

Case 3: Both the baseline data and the gain map data are a plurality of channels.

In this case, the decoder combines the channels of the baseline data and the channels of the gain map data in different manners depending on whether the color mode of the baseline data is the same as the color mode of the gain map data. The following separately provides descriptions.

1. For a case in which the color modes of the baseline data and the gain map data are the same

In this case, the decoder may combine corresponding channels of the baseline data and the gain map data based on the channel combination information described in (1) in Case 3. If the baseline data and the gain map data are both in an RGB mode, the decoder performs R*R, G*G, and B*B or R+R, G+G, and B+B on the baseline data and the gain map data, to combine the channels of the baseline data and the channels of the gain map data. If the baseline data and the gain map data are both in a YUV mode, the decoder performs Y*Y, U*U, and V*V or Y+Y, U+U, and V+V on the baseline data and gain map data, to combine the channels of the baseline data and the channels of the gain map data.

2. For a case in which one of the baseline data and the gain map data is in a color mode in which luminance and chrominance are separated, the other is not in the color mode in which luminance and chrominance are separated, and quantities of channels of the baseline data and the gain map data are the same

In this case, the decoder needs to convert a color mode of at least one of the baseline data and the gain map data, and perform channel combination on converted data in the combination manner described above. The decoder may determine, based on a color mode in a process in which the baseline data and the gain map data, that are carried in the metadata, are combined for processing, to convert a color mode of the baseline data, or convert a color mode of the gain map data, or simultaneously convert the color mode of the baseline data and the color mode of the gain map data. For example, the baseline data is in an RGB mode, and the gain map data is in a YUV mode. The color mode in the process in which the baseline data and the gain map data, that are carried in the metadata, are combined for processing is RGB. In this case, the decoder may convert the color mode of the gain map data from YUV to RGB, and the decoder combines converted channels of the two pieces of data in the manner described in 1.

3. For a case in which one of the baseline data and the gain map data is in a color mode in which luminance and chrominance are separated, the other is not in the color mode in which luminance and chrominance are separated, and quantities of channels of the baseline data and the gain map data are different

In this case, the decoder needs to convert a color mode of at least one of the baseline data and the gain map data, and combine corresponding converted channels of the data. The decoder may determine, based on a color mode in a process in which the baseline data and the gain map data, that are carried in the metadata, are combined for processing, to convert a color mode of the baseline data, or convert a color mode of the gain map data, or simultaneously convert the color mode of the baseline data and the color mode of the gain map data. For example, the baseline data is in an RGBA mode, and the gain map data is in a YUV mode. The color mode in the process in which the baseline data and the gain map data, that are carried in the metadata, are combined for processing is RGB. In this case, the decoder converts the gain map data from YUV to RGB, and performs R*R, G*G, and B*B or R+R, G+G, and B+B on the baseline data and the converted gain map data, to combine the channels of the baseline data and the channels of the gain map data.

4. For a case in which neither the baseline data nor the gain map data is a color mode in which luminance and chrominance are separated, and quantities of channels of the baseline data and the gain map data are different

In this case, the decoder directly combines the corresponding channels of the baseline data and the gain map data, to combine the channels of the baseline data and the channels of the gain map data. For example, the baseline data is in an RGBA mode, and the gain map data is in an RGB mode. In this case, the decoder performs R*R, G*G, and B*B, or R+R, G+G, and B+B on the baseline data and the gain map data, to combine the channels of the baseline data and the channels of the gain map data.

In this application, an encoder obtains baseline data, gain map data, and metadata of a first image, and encodes the baseline data, the gain map data, and the metadata to obtain a bitstream. The decoder receives and parses the bitstream to obtain the baseline data, the gain map data, and the metadata of the first image. The decoder determines and converts the target data (that is, the baseline data, or the gain map data, or an image obtained by combining the baseline data and the gain map data) based on the conversion information carried in the metadata. In this way, the decoder determines and converts the target data based on the conversion information carried in the metadata, so that conversion performed on the target data matches the target data. The decoder converts the target data based on the conversion information matching the target data, so that a dynamic range of the image obtained through conversion can better adapt to a dynamic range supported by a display device, thereby improving display effect.

In this application, first baseline data may also be referred to as the baseline data of the first image, first gain map data may also be referred to as the gain map data of the first image, first metadata may also be referred to as metadata or the metadata of the first image, and the second image may also be referred to as a new HDR image.

An embodiment of this application further provides a signal processing method. The method includes: obtaining first baseline data, first gain map data, and first metadata, where the first baseline data is baseline data of a first image, the first metadata is metadata of the first image, and the first gain map data is metadata of the first image; determining target data based on conversion information carried in the first metadata, where the target data includes the first baseline data and/or the first gain map data; or the target data is a second image, and the second image is obtained based on the first baseline data and the first gain map data; and converting the target data based on the conversion information.

In a possible case, the first image and the second image are HDR or SDR images. The first metadata may be preset or carried in a bitstream.

In a possible case, the conversion information is conversion indication information, and the conversion indication information includes conversion location information. When the conversion location is before determining the second image the conversion indication information further includes conversion object information. The conversion object information indicates target data on which a conversion scheme needs to be performed, and the target data includes:

the first baseline data; or
the first gain map data; or
the first baseline data and the first gain map data.

In a possible case, when the target data includes the first baseline data, conversion scheme information includes a baseline data conversion scheme, and the baseline data conversion scheme indicates to perform at least one of the following conversion on the first baseline data:

color gamut conversion;
color compensation; or
color space conversion.

In a possible case, the baseline data conversion scheme further indicates a conversion parameter used when the first baseline data is converted.

In a possible case, when the baseline data conversion scheme indicates that the color compensation is performed on the first baseline data, the conversion parameter includes any one of the following parameters:

a color compensation matrix;

a conversion function; or

a compensation value and a compensation method.

In a possible case, the conversion information is conversion indication information, and the conversion indication information includes conversion scheme information. When the target data includes the first gain map data, the conversion scheme information includes a gain map data conversion scheme, and the gain map data conversion scheme indicates to perform at least one of the following conversion on the first gain map data:

color space conversion; and

channel conversion, where the channel conversion is used to restore a channel of the first gain map data to an original channel.

In a possible case, the gain map data conversion scheme further indicates a conversion parameter used when the first gain map data is converted.

In a possible case, when the target data is the second image, the conversion scheme information includes an image conversion scheme, and the image conversion scheme indicates to perform at least one of the following conversion on the second image:

color gamut conversion; or

color compensation.

An embodiment of this application further provides an encoding method. The method includes: determining first baseline data, first gain map data, and first metadata based on an obtained first image, where the first metadata carries conversion information; and encoding the first baseline data, the first gain map data, and the first metadata to obtain a bitstream.

In a possible case, the conversion information is conversion indication information, the conversion indication information includes conversion location information and conversion scheme information, the conversion location information indicates a location at which a conversion scheme occurs, and the conversion scheme information indicates the conversion scheme. The first metadata may be preset or carried in the bitstream.

In a possible case, the location at which the conversion occurs is before or after a new HDR image is synthesized based on the received bitstream.

In a possible case, when the conversion occurs before the new HDR image is synthesized, the conversion indication information further includes conversion object information, the conversion object information indicates target data on which the conversion scheme needs to be performed, and the target data includes:

baseline data; or

gain map data; or

the baseline data and the gain map data.

In a possible case, when the target data includes the baseline data, the conversion scheme information includes a baseline data conversion scheme, and the baseline data conversion scheme indicates to perform at least one of the following conversion on the baseline data:

color gamut conversion; or

color compensation; or

color space conversion.

In a possible case, the baseline data conversion scheme further indicates a conversion parameter used when the conversion is performed.

In a possible case, when the baseline data conversion scheme indicates that the color compensation is performed, the conversion parameter includes any one of the following parameters:

color compensation matrix; or

a conversion function; or

a compensation value and a compensation method.

In a possible case, when the target data includes the gain map data, the conversion scheme information includes a gain map data conversion scheme, and the gain map data conversion scheme indicates to perform at least one of the following conversion on the gain map data:

color space conversion; and
channel conversion, where the channel conversion is used to restore a channel of the gain map data to an original channel.

In a possible case, the gain map data conversion scheme further indicates a conversion parameter used when the first gain map data is converted.

In a possible case, when the location at which the conversion occurs is after the new HDR image is synthesized, the conversion scheme information includes an image conversion scheme, and the image conversion scheme indicates to perform at least one of the following conversion on the new HDR image:

color gamut conversion; or
color compensation.

In a possible case, the conversion information includes at least one or more of the following:

color mode information of the baseline of the first image; and/or
color mode information of the gain map data of the first image; and/or
color mode information that is to be transformed and processed and that corresponds to the baseline and the gain map data of the first image. When an image color space model of the baseline is a first color mode/space, a color space model in a process in which the baseline and a gain map are combined for processing is a second color mode/space, the color mode information that is to be transformed and processed and that corresponds to the baseline and the gain map data of the first image includes a color mode/space model conversion manner, where the first color mode/space is different from the second color mode/space.

The conversion information includes at least one or more of the following:

color mode information of the baseline of the first image; and/or
color mode information of a gain map image of the first image; and/or
color mode information that is to be transformed and processed and that corresponds to the baseline and the gain map image of the first image. When an image color space model of the baseline is a first color mode/space, a color space model used in a process in which the baseline and the gain map are combined for processing is a second color mode/space, the color mode information that is to be transformed and processed and that corresponds to the baseline and the gain map data of the first image includes a color mode/space model conversion manner, where the first color mode/space is different from the second color mode/space.

The first color mode/space and the second color mode/space are one of the following:
RGB, YUV, YCbCr, Lab, HSV, or ICtCp.

In this way, conversion flexibility is higher, and multi-format adaptation can be implemented for the metadata. This can facilitate more efficient and reasonable encoding.

In a possible case, the conversion information includes at least one or more of the following:

chrominance format information of the baseline of the first image; and/or
chrominance format information of the gain map data of the first image; and/or
chrominance format information that is to be transformed and processed and that corresponds to the baseline and the gain map data of the first image. When chrominance format information of the baseline is first chrominance format information, and chrominance format information used in the process in which the baseline and the gain map are combined for processing is second chrominance format information, the conversion information includes the chrominance format information that is to be transformed and processed and that corresponds to the baseline and the gain map data of the first image, where the first chrominance format information is different from the second chrominance format information.

The conversion information includes at least one or more of the following:

chrominance format information of the baseline of the first image; and/or
chrominance format information of the gain map image of the first image; and/or
chrominance format information that is to be transformed and processed and that corresponds to the baseline and the gain map image of the first image. When chrominance format information of the baseline is first chrominance format information, and chrominance format information used in the process in which the baseline and the gain map are combined for processing is second chrominance format information, the conversion information includes the chrominance format information that is to be transformed and processed and that corresponds to the baseline and the gain map data of the first image, where the first chrominance format information is different from the second chrominance format information.

The first chrominance format information and the second chrominance format information are one of the following:
RGB4:4:4, grayscale (grayscale), YUV4:4:4, YUV4:2:2, YUV4:2:0, and channel mode of the baseline or the gain map image of the first image.

In this way, a matching degree of color gamuts of different display devices is higher, and color space conversion is supported. This can facilitate more efficient and reasonable encoding.

In a possible case, the conversion information includes at least one or more of the following:

information about how to combine a plurality of channels of a color mode of the baseline of the first image with a plurality of channels or a single channel of a color mode of the gain map data; or
information about how to combine the plurality of channels of the color mode of the baseline of the first image with a plurality of channels or a single channel of a color mode of the gain map image. In this way, conversion flexibility is higher, and the metadata may implement flexible adaptation of a plurality of manners.

This application further provides another embodiment. The embodiment of the present invention is applied to a receiving and displaying side, and all pixels in an image or a video in an SDR or HDR format are decoded and displayed. The following processes are mainly included.

1. Obtain a baseline image, a gain map image/gain map data, and metadata from a bitstream.

I. Obtain the metadata

The information may be obtained from metadata information encapsulated in the bitstream, or may be obtained from SEI of HEVC or VVC, a user-defined NAL unit, or a reserved packet unit, or may be APP extension information encapsulated in JFIF, a data segment encapsulated in MP4, or the like. Alternatively, the metadata information may be obtained in another preset manner.

(a) The metadata may include color mode information.

The metadata may include color mode information of the baseline, and/or color mode information of the gain map data, and/or color mode information that is to be transformed and processed and that corresponds to the baseline and the gain map data. A color space model or the color mode information of the baseline/gain map means that an image of the baseline or gain map is one of RGB, YUV, YCbCr, Lab, HSV, and ICtCp.

The metadata may further include color mode conversion information. It is assumed that a color space model of the baseline image is a first color mode/space (for example, RGB), but a color space model used in a process in which the baseline image and a gain map/gain map data are combined for processing is a second color mode/space (for example, YUV). In this case, a color mode/space model conversion process is required. The process may be completed in a preset conversion manner or according to a color mode conversion method transmitted via the metadata.

(b) The metadata may include luminance component and chrominance component format information.

The metadata may include luminance component and chrominance component format (chroma subsampling) information (for example, RGB4:4:4, grayscale (grayscale), YUV4:4:4, YUV4:2:2, YUV4:2:0, and a two-channel mode) of the baseline image and the gain map image, and is used to perform transform and processing on the baseline image and/or the gain map image.

(c) The metadata may include information about how to combine a plurality of channels of a color mode of the baseline with a plurality of channels or a single channel of a color mode of the gain map data.

The metadata includes channel (channel) information of the baseline and gain map, where the information indicates how to combine the channels of the baseline and gain map.

2. Obtain the baseline image.

The baseline image serves as a source and may be in any format. During encoding and transmission, a corresponding transfer function may be used. A decoder side performs corresponding decoding based on preset information or related information in the metadata, to obtain the baseline image. This process includes image data obtained by decoding the received bitstream via any decoder (in HEVC, JPEG, ProRes, HEIF, AV1F, or the like). The image data obtained in this process includes image data in any color space/mode (RGB, YUV, YCbCr, CIELAB, HSV, HSL, ICtCp, or the like). It should be noted that a format of the bitstream is not limited in the present invention. In terms of a color space, the bitstream may be in a format of YUV or RGB. In terms of a bit width of the data, the bitstream may be 8 bits, 10 bits, 12 bits, or the like. In terms of a numeric domain, the bitstream may be in a format of a linear domain or a nonlinear domain like PQ/HLG/Gamma/log.

(a) Color mode/space conversion of the baseline image

If the color space model of the baseline image is the first color mode/space (for example, YUV), but the color space model used in the process in which the baseline and the gain map image/gain map data are combined for processing is the second color mode/space (for example, RGB). In this case, the color mode/space model conversion process is required. The baseline image is transformed/converted based on color space model information (preset or transferred in the metadata) of the baseline image and color space model information (preset or transferred in the metadata) in the process in which the baseline and the gain map image/gain map data are combined for processing, to obtain the baseline image in a new format. A transform/conversion manner includes a default manner or a manner described in a conversion process in the metadata. A 3x3 conversion matrix specified in an ITU standard or another manner may be used.

(b) Chrominance format conversion of the baseline image

If a luminance component and chrominance component format of the baseline image is a first chrominance format (for example, YUV4:2:0), and a luminance component and chrominance component format of a new baseline image to be converted and processed is a second chrominance format (for example, RGB4:4:4), the chrominance format conversion of the baseline image is to be performed during conversion. The conversion herein includes chrominance format upsampling conversion from YUV4:2:0 to YUV4:4:4, and a color mode/space model conversion process from YUV4:4:4 to RGB4:4:4. The chrominance format conversion is performed on the baseline image based on chrominance format information (preset or transferred in the metadata) of the baseline image and chrominance format information (preset or transferred in the metadata) in the process in which the baseline image and the gain map are combined for processing, to obtain the baseline image in a new format. The conversion process may be completed in a preset conversion manner or according to a conversion method transmitted via the metadata. The process may include a chrominance upsampling process and another transform process.

(c) Other related conversion of the baseline image

It should be noted that the present invention does not limit a sequence of the described color mode/space model conversion process and the chrominance format conversion process. In the present invention, the described color mode/space model conversion process and the chrominance format conversion process are not limited to being performed simultaneously, and only one of the two processes or both processes may be performed.

It should be noted that, before/after the described color mode/space model conversion process and the chrominance format conversion process, there may be a corresponding preset mapping process or a corresponding mapping process described based on the metadata. The mapping is not mandatory in this patent, and may be the following examples: normalization and inverse normalization, adding an offset and reducing an offset, multiplying by a numerical coefficient and dividing by a numerical coefficient, and the like.

It should be noted that, before/after the described color mode/space model conversion process and the chrominance format conversion process, there may be a corresponding preset upsampling/downsampling process or a corresponding upsampling/downsampling process described based on the metadata. After sampling, the base image with new resolution may be obtained.

It should be noted that the metadata may include processing information for the baseline and the gain map, or preset processing information may be used. BaseAfter may be obtained by processing the baseline Base based on the metadata. A processing scheme may be as follows:

1. BaseAfter[i]=Base[i].

2. The metadata includes a first preset value THH and a second preset value THL of the baseline data, and BaseAfter[i]=Base[i]*THH+(A-Base[i])*THL is used, where A is a maximum value stored in Base, and when Base is normalized to a range of 0 to 1.0, A is 1.0.

3. The metadata includes the first preset value THH and the second preset value THL of the baseline data. The baseline data may be nonlinearly encoded data like PQ/HLG/LOG/Gamma encoded data. Base[i] is first converted to the linear domain, and then BaseAfter[i]=Base[i]*THH+(A-Base[i])*THL is used, where A is the maximum value stored in Base, and when Base is normalized to the range of 0 to 1.0, A is 1.0.

4. The metadata includes the preset value THL of the baseline data, and BaseAfter[i]=Base[i]+THL is used.

5. The metadata includes the preset value THH of the baseline data, and BaseAfter[i]=THH+A-Base[i] is used, where A is the maximum value stored in Base, and when Base is normalized to the range of 0 to 1.0, A is 1.0.

6. The metadata includes a parameter for a mapping relationship, TME() is obtained based on the parameter, and BaseAfter[i]=TMB(Base[i]).

7. The metadata includes the parameter for the mapping relationship, TME() is obtained based on the parameter, and BaseAfter[i]=TME()*Base[i].

The mapping relationship has various forms, such as a form of sigmoid, a cubic spline, gamma, a straight line, or a segmented curve, or a form of an inverse function thereof. This is not limited in the present invention. A curve represented by Formula (19) or an inverse curve thereof may be used:

$$L' = F(L) = a \times \left( \frac{p \times L^n}{(p-1) \times L^n + 1} \right)^m + b \quad \text{Formula (19)}$$

It should be noted that L and L' may be normalized optical signals or electrical signals. This is not limited in the present invention. Alternatively, transform may be performed in a form of a neural network: obtaining type information of the neural network, for example, a transformer or a convolutional neural network; constructing the neural network based on network information in the gain map data; and processing the gain map data by using the neural network. It should be noted that the mapping may be global tone mapping or local tone mapping. This is not limited in the present invention.

3. Obtain the gain map image.

The gain map image serves as an intermediary between the baseline and a final combined image, and may be in any format. During encoding and transmission, a corresponding transfer function may be used. The decoder side performs corresponding decoding based on the preset information or the related information in the metadata, to obtain the gain map image. This process includes image data obtained by decoding the received bitstream via any decoder (in HEVC, JPEG, ProRes, HEIF, AV1F, or the like). The image data obtained in this process includes image data in any color space mode (RGB, YUV, YCbCr, CIELAB, HSV, HSL, ICtCp, or the like). It should be noted that the format of the bitstream is not limited in the present invention. In terms of a color space, the bitstream may be in a format of YUV or RGB. In terms of a bit width of the data, the bitstream may be 8 bits, 10 bits, 12 bits, or the like. In terms of a numeric domain, the bitstream may be in a format of a linear domain or a nonlinear domain like PQ/HLG/Gamma/log.

(a) First color mode/space conversion manner of the gain map

If the baseline image obtained through decoding is in a first color space (for example, RGB), the gain map image is in a second color space (for example, YUV), and a synthesized image with a new dynamic range is required to be in the first color space, the gain map image needs to be first converted to the first color space. A transform manner includes a default matrix manner or a transform manner transferred in the metadata (for example, a 3x3 transform matrix).

(No transform) if the baseline image obtained through decoding is in the first color space (for example, RGB), the gain map image is also in the first color space (RGB), and the synthesized image with the new dynamic range is required to be in the first color space, no transform is performed or default identity transform is used.

If the baseline image obtained through decoding is in the first color space (for example, YUV or CIELAB) and chrominance chroma and luminance luma in the first color space are separated, and the gain map image is also in the first color space (YUV) and the synthesized image with the new dynamic range is required to be in the second color space (RGB), the gain map image needs to be first converted to the first color space. The conversion manner may include a default transform manner or a transform manner transmitted via the metadata.

If the baseline image obtained through decoding is in the first color space (for example, HSV), the gain map image is in the second color space (for example, YUV), and the synthesized image with the new dynamic range is required to be in a third color space (for example, RGB), when the image with the new dynamic range is synthesized, preset transform needs to be performed, or color space transform needs to be performed based on the metadata.

(b) Second color space/mode conversion manner of the gain map

If the baseline image obtained through decoding is in the first color space (for example, RGB), and the process in which the baseline and the gain map image/gain map data are combined for processing is in the second color space (for example, YUV), the gain map image needs to be first converted to the second color space. The gain map image/gain map data is transformed/converted based on color space model information (preset or transferred in the metadata) of the gain map image/gain map data and the color space model information (preset or transferred in the metadata) in the process in which the baseline and the gain map image are combined for processing, to obtain the gain map image/gain map data in a new format. The transform manner includes a default manner or a transform manner transferred in the metadata, and may be a 3x3 matrix manner specified by ITU.

(No transform) if the baseline image obtained through decoding is in the first color space (for example, RGB), and the process in which the baseline and the gain map are combined for processing is in the first color space, no transform is performed or a default identity transform is used.

(c) Chrominance format conversion of the gain map

If a luminance component and chrominance component format of the gain map image is the first chrominance format (for example, YUV4:2:0), and a luminance component and chrominance component format of a new gain map image to be converted and processed is the second chrominance format (for example, YUV4:4:4), or the chrominance format information in the process in which the baseline and the gain map are combined for processing is a third chrominance format (for example, RGB4:4:4), the gain map is to be converted during conversion. The conversion herein includes upsampling conversion from YUV4:2:0 to YUV4:4:4 and color space model conversion from YUV4:4:4 to RGB4:4:4. The chrominance format conversion is performed on the gain map based on chrominance format information (preset or transferred in the metadata) of the gain map image and the chrominance format information (preset or transferred in the metadata) in the process in which the baseline and the gain map are combined for processing, to obtain the baseline image in a new format. The conversion process may be completed in a preset conversion manner or according to a conversion method transmitted via the metadata.

(d) Other related conversion of the gain map image/gain map data

It should be noted that the present invention does not limit a sequence of the described color mode/space model conversion process and the chrominance format conversion process. In the present invention, the described color mode/space model conversion process and the chrominance format conversion process are not limited to being performed simultaneously, and only one of the two processes or both processes may be performed.

It should be noted that, before/after the described color mode/space model conversion process and the chrominance format conversion process, there may be a corresponding preset mapping process or a corresponding mapping process described based on the metadata. The mapping is not mandatory in this patent, and may be the following examples: normalization and inverse normalization, adding an offset and reducing an offset, multiplying by a numerical coefficient and dividing by a numerical coefficient, upsampling and downsampling of an image, and the like.

It should be noted that, before/after the described color mode/space model conversion process and the chrominance format conversion process, there may be a corresponding preset upsampling/downsampling process or a corresponding upsampling/downsampling process described based on the metadata. After sampling, the gain map with new resolution may be obtained.

It should be noted that the metadata may include processing information for the baseline and the gain map, or preset processing information may be used. The gain map is used as an example. The gain map Enhance may be processed based on the metadata to obtain EnhanceAfter. A processing scheme may be as follows:

1. $EnhanceAfter[i]=Enhance[i]$.

2. The metadata includes a first preset value THH and a second preset value THL of the gain map data, and $EnhanceAfter[i]=Enhance[i]*THH+(A-Enhance[i])*THL$ is used, where A is a maximum value stored in Enhance, and when Enhance is normalized to a range of 0 to 1.0, A is 1.0.

3. The metadata includes the first preset value THH and the second preset value THL of the gain map data. The gain map data may be nonlinearly encoded data like PQ/HLG/LOG/Gamma encoded data. Enhance[i] is first converted to the linear domain, and then $EnhanceAfter[i]=Enhance[i]*THH+(A-Enhance[i])*THL$ is used, where A is the maximum value stored in Enhance, and when Enhance is normalized to the range of 0 to 1.0, A is 1.0.

4. The metadata includes the preset value THL of the gain map data, and $EnhanceAfter[i]=Enhance[i]+THL$ is used.

5. The metadata includes the preset value THH of the gain map data, and $EnhanceAfter[i]=THH+A-Enhance[i]$ is used, where A is the maximum value stored in Enhance, and when Enhance is normalized to the range of 0 to 1.0, A is 1.0.

6. The metadata includes a parameter for a mapping relationship, TME() is obtained based on the parameter, and $EnhanceAfter[i]=TMB(Enhance[i])$.

7. The metadata includes the parameter for the mapping relationship, TME() is obtained based on the parameter, and EnhanceAfter[i]=TME()*Enhance[i].

The mapping relationship has various forms, such as a form of sigmoid, a cubic spline, gamma, a straight line, or a segmented curve, or a form of an inverse function thereof. This is not limited in the present invention. The curve represented by Formula (19) or the inverse curve thereof may be used, and Formula (19) is re-expressed as follows:

$$L' = F(L) = a \times \left( \frac{p \times L^n}{(p-1) \times L^n + 1} \right)^m + b \quad \text{Formula (19)}$$

It should be noted that L and L' may be normalized optical signals or electrical signals. This is not limited in the present invention. Alternatively, transform may be performed in a form of a neural network: obtaining type information of the neural network, for example, a transformer or a convolutional neural network; constructing the neural network based on network information in the gain map data; and processing the gain map data by using the neural network. It should be noted that the mapping may be global tone mapping or local tone mapping. This is not limited in the present invention.

II. Combine the baseline image and the gain map image based on preset information or the metadata, to obtain a reconstructed image with a new dynamic range.

The gain map processed result EnhanceAfter may be obtained according to the previous process, and a combined result newPictue may be obtained based on BaseAfter.

(a) Obtain a multi-color channel combination manner.

A multi-color channel combination manner of the baseline and the gain map image/gain map data is obtained based on the information transferred or preset in the metadata about "how to combine the plurality of channels of the color mode of the baseline with the plurality of channels or the single channel of the color mode of the gain map data". The baseline image and the gain map image/gain map data are both in a color mode or color space. Different color modes or color spaces include different quantities of color channels. For example, a YUV color mode includes three color channels: Y, U, and V, a grayscale color mode includes only one color channel, and a CMYK color mode includes four color channels.

It is assumed that BaseAfter is a single color channel, and EnhanceAfter is a single color channel. In this case, preset combination manner information or combination manner information obtained from the metadata may include a one-to-one combination manner.

It is assumed that BaseAfter is a multi-color channel, and EnhanceAfter is a single-color channel. In this case, preset combination manner information or combination manner information obtained from the metadata may include a one-to-one combination manner or a many-to-one combination manner, which are as follows:

Many-to-one: For example, BaseAfter is a three-channel image (for example, RGB) in which luminance and chrominance are not separated, and EnhanceAfter is a single-channel image C. In this case, R*C, G*C, and B*C, or R+C, G+C, and B+C are performed, in other words, each channel is multiplied or added.

One-to-one: For example, BaseAfter is a three-channel image (for example, YUV, Lab, or HSV) in which luminance and chrominance are separated. In this case, Y*C, U*1, and V*1 or Y+C, U+0, and V+0 are performed, that is, only luminance channels are multiplied or added, and chrominance channels are not operated.

It is assumed that BaseAfter has a plurality of channels, and EnhanceAfter has a plurality of channels. In this case, preset combination manner information or combination manner information obtained from the metadata may include a many-to-many manner.

Three-to-two: For example, BaseAfter is a model (for example, Lab or YUV) in which luminance and chrominance are separated, and EnhanceAfter has two color channels (for example, which are represented by YC). In this case, a combination operation is performed on corresponding luminance and color channels, for example, baseY*EnhanceAfterY, baseU*EnhanceAfterC, and baseV*EnhanceAfterC.

Three-to-two: For example, BaseAfter is a model (for example, HSV or HIS) in which luminance and chrominance are separated, and EnhanceAfter has two color channels (for example, which are represented by YC). In this case, a combination operation is performed on a corresponding luminance (V or I channel, or the like) and a color saturation or hue channel, for example, baseV*EnhanceAfterY, baseS*EnhanceAfterC, and baseH remain unchanged, or baseV*EnhanceAfterY, baseH*EnhanceAfterC, and baseS remain unchanged.

Many-to-many: For example, BaseAfter and EnhanceAfter have a same color space model (for example, RGB or YUV). In this case, a combination operation is performed on corresponding channels, for example, R*R, G*G, and B*B.

Many-to-many: For example, a color space model of BaseAfter is RGB, and a color space model of EnhanceAfter is a color space model (for example, YUV or Lab) in which luminance and chrominance are separated. In this case, conversion from the second color space to the first color space (for example, from YUV to RGB) needs be performed first, and then a combination operation on corresponding channels is performed.

Many-to-many: For example, the baseline and gain map have a plurality of channels and a quantity of channels is greater than three (for example, RGBA). In this case, combining the baseline with the gain map should be performed in a proper manner based on information such as a channel characteristic and luminance and chrominance separation. A manner of processing only common color channels like RGB may be used.

(b) Perform combination calculation in the multi-color channel combination manner.

Scheme 1: newPictue[i]=BaseAfter[i]*f(EnhanceAfter[i]), where f(x) is a numerical domain conversion function.

Scheme 2: newPictue[i]=BaseAfter[i]+f(EnhanceAfter[i]), where f(x) is a numerical domain conversion function.

Scheme 3: newPictue[i]=g(BaseAfter[i]*f(EnhanceAfter[i])), where f(x) is a numerical domain conversion function, and g(x) is a mapping function.

Scheme 4: newPictue[i]=g(BaseAfter[i]+f(EnhanceAfter[i])), where f(x) is a numerical domain conversion function, and g(x) is a mapping function.

It should be noted that the present invention does not limit forms of f(x) and g(x), in other words, BaseAfter[i] and EnhanceAfter[i] are not limited to any domain, and may be a linear domain, a PQ domain, a log domain, or the like. Further, the present invention is not limited to whether other image processing is performed, after obtaining the reconstructed image newPictue with the new dynamic range, on the reconstructed image before displaying the reconstructed image.

This application further provides another embodiment. A baseline is a first format (a first transfer function), and an image in a second format (a second transfer function) is obtained by using a gain map, where the gain map is a second or third transfer function; or

the baseline is a first color space, and an image of a second color space is obtained by using the gain map; or

the baseline is a first color gamut space, and changes to a second color gamut space by using a 3x3 matrix transferred in metadata or in a default manner, and then an image with a higher dynamic range of the second color gamut space is obtained by using the gain map; or

the baseline is a first color space YUV, and the gain map is a first YUV color space or a second RGB color space. After the baseline is converted to the second RGB color space, an image in the second color space is obtained by using the gain map.

In embodiments of this application, the symbol * and the symbol × may be interchangeable.

In the technical solutions of this application, in a process of transforming the baseline image by using the metadata, the baseline image may be processed by using the mapping function. In a process of transforming the gain map data by using the metadata, the gain map data may be processed by using the mapping function. In the process of transforming the gain map data by using the metadata, upsampling/downsampling may be performed. An interpolation algorithm in a texture sampling algorithm of OpenGL, Vulkan, or Metal is used for processing, or a good algorithm is selected from a set of interpolation algorithms by using an index.

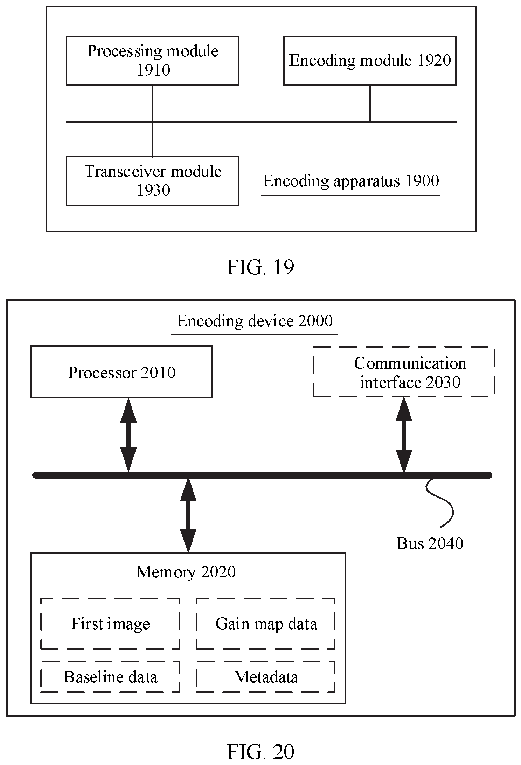

The foregoing describes the data processing method provided in this application with reference to the accompanying drawing. The following describes an encoding apparatus provided in this application with reference to the accompanying drawing. FIG. 19 is a diagram of a structure of an encoding apparatus according to this application. The encoding apparatus 1900 includes a processing module 1910 and an encoding module 1920. The processing module 1910 is configured to perform step S1410, and the encoding module 1920 is configured to perform step S1420. In some possible examples, the encoding apparatus 1900 may further include a transceiver module 1930, configured to perform step S1430. The encoding apparatus may be configured to implement a function implemented by the source device 1010 in FIG. 10.

It should be understood that the encoder in the foregoing embodiment may correspond to the encoding apparatus 1900, and may correspond to a corresponding body for performing the method embodiment of this application. In addition, operations and/or functions of the modules in the encoding apparatus 1900 are respectively used to implement corresponding procedures of the methods in the embodiments. For brevity, details are not described herein again.

The foregoing describes the encoding apparatus provided in this application with reference to the accompanying drawing. The following describes an encoding device provided in this application with reference to the accompanying drawing. FIG. 20 is a diagram of a structure of an encoding device according to this application. As shown in FIG. 20, the encoding device 2000 may include a processor 2010 configured to execute a program or instructions stored in a memory 2020. When the program or the instructions stored in the memory 2020 are executed, the processor is configured to perform the method in the foregoing embodiment of this application. The encoding device 2000 may be configured to implement a function implemented by the source device 1010 in FIG. 10.

In a possible case, the encoding device 2000 may further include a communication interface 2030. In FIG. 20, the communication interface 2030 is represented by a dashed line, and therefore is optional for the encoding device 2000. When the communication interface 2030 implements a function of the transceiver module 1910, the communication interface 2030 is configured to receive a first image.

A quantity of the processor 2010, a quantity of the memory 2020, and a quantity of the communication interface 2030 constitute no limitation on this embodiment of this application, and in practice, may be configured based on a service requirement.

In a possible case, the memory 2020 is located outside the encoding device 2000.

In a possible case, the encoding device 2000 includes a memory 2020. The memory 2020 is connected to at least one processor 2010, and the memory 2020 stores instructions that can be executed by the at least one processor 2010. The memory 2020 may be further configured to store the first image, baseline data of the first image, gain map data of the first image, and metadata of the first image. In FIG. 20, the memory 2020 is represented by a dashed line, and therefore is optional for the encoding device 2000.

The processor 2010 and the memory 2020 may be coupled through an interface circuit, or may be integrated together. This is not limited herein. The processor 2010 is configured to implement a function of the processing module 1910 in the encoding apparatus described in FIG. 19.

A specific connection medium between the processor 2010, the memory 2020, and the communication interface 2030 is not limited in embodiments of this application. In embodiments of this application, the processor 2010, the memory 2020, and the communication interface 2030 are connected through a bus 2040 in FIG. 20. The bus is represented by a bold line in FIG. 20, and a connection manner between other components is merely described as an example, and is not limited thereto. Buses may be classified into an address bus, a data bus, a control bus, and the like. For ease of representation, the bus is represented by only one bold line in FIG. 20. However, it does not mean that there is only one bus or one type of bus.

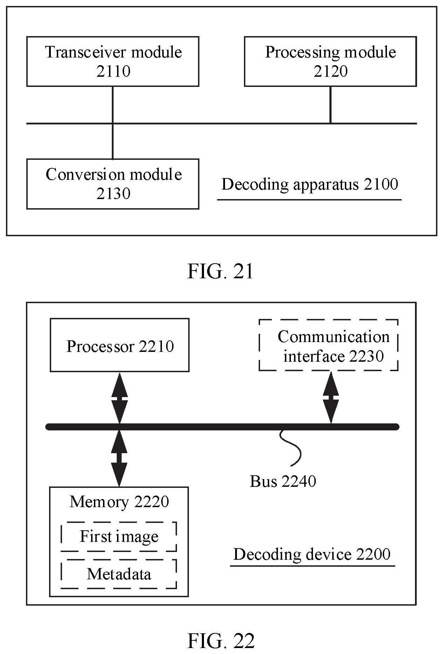

The foregoing describes the encoding device provided in this application with reference to the accompanying drawing. The following describes a decoding apparatus provided in this application with reference to the accompanying drawing. FIG. 21 is a diagram of a structure of a decoding apparatus according to this application. As shown in FIG. 21, the decoding apparatus includes a transceiver module 2110, a processing module 2120, and a conversion module 2130. The transceiver module 2110 is configured to perform step S1440, the processing module 2120 is configured to perform step S1450, and the conversion module 2130 is configured to perform step S1460.

The processing module 2120 is configured to receive a bitstream. The processing module 2120 is configured to determine target data based on conversion information carried in metadata, where the metadata is metadata of a first image. The target data includes baseline data of the first image and/or gain map data of the first image, or the target data includes a second image. The second image is obtained based on the baseline data and the gain map data. The conversion module 2130 is configured to convert the target data based on the conversion information.

It should be understood that the decoder in the foregoing embodiment may correspond to the decoding apparatus 2100, and may correspond to a corresponding body for performing the method embodiment of this application. In addition, operations and/or functions of the modules in the decoding apparatus 2100 are respectively used to implement corresponding procedures of the method in the embodiment. For brevity, details are not described herein again.

The foregoing describes the decoding apparatus provided in this application with reference to the accompanying drawing. The following describes a decoding device provided in this application with reference to the accompanying drawing. FIG. 22 is a diagram of a structure of a decoding device according to this application. As shown in FIG. 22, the decoding device 2200 includes a processor 2210 and a memory 2220. The processor 2210 is configured to execute a program or instructions stored in the memory 2220. When the program or the instructions stored in the memory 2220 are executed, the processor 2210 is configured to perform the method in the embodiment in FIG. 14.

In a possible case, the decoding device 2200 may further include a communication interface 2230. In FIG. 22, the communication interface 2230 is represented by a dashed line, and therefore is optional for the decoding device 2200. The communication interface 2230 is configured to implement a function of the transceiver module 2110 in FIG. 21, to perform S1440 in the method embodiment. The processor 2210 is configured to implement functions of the processing module 2120 and the conversion module 2130 in FIG. 21, to perform S1450 and S1460 in the method embodiment.

A quantity of the processor 2210, a quantity of the memory 2220, and a quantity of the communication interface 2230 constitute no limitation on this embodiment of this application, and in practice, may be configured based on a service requirement.

In a possible case, the memory 2220 is located outside the decoding device 2200.

In a possible case, the decoding device 2200 includes a memory 2220. The memory 2220 is connected to at least one processor 2210, and the memory 2220 stores instructions that can be executed by the at least one processor 2210. The memory 2220 is configured to store a bitstream, and baseline data, gain map data, metadata, and the like of a first image that are obtained through decoding. In FIG. 22, the memory 2220 is represented by a dashed line, and therefore is optional for the decoding device 2200.

The processor 2210 and the memory 2220 may be coupled through an interface circuit, or may be integrated together. This is not limited herein.

A specific connection medium between the processor 2210, the memory 2220, and the communication interface 2230 is not limited in embodiments of this application. In embodiments of this application, the processor 2210, the memory 2220, and the communication interface 2230 are connected through a bus 2240 in FIG. 22. The bus is represented by a bold line in FIG. 22, and a connection manner between other components is merely described as an example, and is not limited thereto. Buses may be classified into an address bus, a data bus, a control bus, and the like. For ease of representation, the bus is represented by only one bold line in FIG. 22. However, it does not mean that there is only one bus or one type of bus.

It should be understood that the processor mentioned in embodiments of this application may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

An embodiment of this application further provides a computer-readable storage medium, including a program or instructions. When the program or the instructions are run on a computer, the encoding and decoding methods in the foregoing described method embodiments are implemented.

In embodiments of this application, the term "at least one" means one or more, and "a plurality of" means two or more. The term "and/or" is to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate a, b, c, a-b, a-c, b-c, or a-b-c, where any one of a, b, c, a-b, a-c, b-c, or a-b-c may include a single a, a single b, and a single c, or may include a plurality of a, a plurality of b, and a plurality of c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish different criteria, and are not used to indicate different content, priorities, or importance of the two criteria.

In addition, the terms "include" and "have" in embodiments, claims, and accompanying drawings of this application are not exclusive. For example, a process, a method, a system, a product, or a device including a series of steps or modules/units is not limited to the listed steps or modules, and may further include steps or modules/units that are not listed.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-readable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by a computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clearly that a person skilled in the art can make various modifications and variations to this application without departing from the spirit and scope of this application. In this case, if the modifications and variations made to this application fall within the scope of the claims of this application and equivalent technologies thereof, this application is intended to cover these modifications and variations.

**Claims**

1. A data processing method, wherein the method comprises:

   determining target data based on conversion information carried in metadata, wherein the metadata is metadata of a first image, and the target data comprises baseline data of the first image and/or gain map data of the first image; or the target data comprises a second image, wherein the second image is obtained based on the baseline data and the gain map data; and
   converting the target data based on the conversion information.

2. The method according to claim 1, wherein the metadata is carried in a bitstream; and
   the method further comprises: obtaining the metadata from the bitstream.

3. The method according to claim 1 or 2, wherein the conversion information comprises conversion location information and conversion scheme information, the conversion location information indicates a location at which the conversion occurs, the conversion scheme information indicates a conversion scheme used when the target data is converted, and the conversion occurs before or after the second image is obtained.

4. The method according to any one of claims 1 to 3, wherein
   when the conversion occurs before the second image is obtained, the conversion information further comprises conversion object information, the conversion object information indicates a conversion object on which the conversion scheme needs to be performed, and the conversion object comprises:

   the baseline data of the first image; or
   the gain map data of the first image; or
   the baseline data of the first image and the gain map data of the first image.

5.  The method according to claim 4, wherein when the conversion object comprises the baseline data, the conversion scheme information comprises a baseline data conversion scheme, and the baseline data conversion scheme indicates to perform at least one of the following conversion on the baseline data:

    color gamut conversion;
    chrominance format conversion;
    color compensation; or
    color mode conversion.

6.  The method according to claim 5, wherein the baseline data conversion scheme further indicates a conversion parameter used when the baseline data is converted.

7.  The method according to claim 6, wherein the conversion parameter comprises:

    a compensation matrix; or
    a conversion matrix; or
    a conversion function; or
    a compensation value.

8.  The method according to claim 4, wherein
    when the conversion object comprises the gain map data, the conversion scheme information comprises a gain map data conversion scheme, and the gain map data conversion scheme indicates to perform at least one of the following conversion on the gain map data:

    color mode conversion;
    chrominance format conversion; or
    channel conversion, wherein the channel conversion is used to restore a channel of the gain map data to an original channel.

9.  The method according to claim 8, wherein the gain map data conversion scheme further indicates a conversion parameter used when the gain map data is converted.

10. The method according to claim 9, wherein the conversion parameter comprises:

    a conversion matrix; or
    a conversion function; or
    a channel conversion function.

11. The method according to any one of claims 1 to 10, wherein the conversion information comprises channel combination information, and the channel combination information indicates a combination scheme of a channel of the baseline data and the channel of the gain map data.

12. The method according to claim 11, wherein

    a color mode of at least one of the baseline data and the gain map data is a red green blue RGB mode or a grayscale mode; or
    a color mode of the baseline data is the RGB mode, and a color mode of the gain map data is any one of a YUV mode, a Lab mode, an HSV mode, a YCbCr mode, an ICtCp mode, and a grayscale mode; or
    the color mode of the baseline data is any one of the YUV mode, the Lab mode, the HSV mode, the YCbCr mode, the ICtCp mode, and the grayscale mode, and the color mode of the gain map data is the RGB mode; or
    the color mode of the baseline data and the color mode of the gain map data are both any one of the YUV mode, the Lab mode, the HSV mode, the YCbCr mode, the ICtCp mode, and the grayscale mode.

13. The method according to claim 12, wherein

    when the color modes of the baseline data and the gain map data are both the RGB mode, the channel combination information indicates that an R channel of the baseline data is combined with an R channel of the gain map data, a G channel of the baseline data is combined with a G channel of the gain map data, and a B channel of the baseline data is combined with a B channel of the gain map data; or

when the color mode of the baseline data is the RGB mode and the color mode of the gain map data is the grayscale mode, the channel combination information indicates that the R channel of the baseline data is combined with a grayscale value of the gain map data, the G channel of the baseline data is combined with the grayscale value of the gain map data, and the B channel of the baseline data is combined with the grayscale value of the gain map data; or

when the color mode of the baseline data is the grayscale mode and the color mode of the gain map data is the RGB mode, the channel combination information indicates that the R channel of the gain map data is combined with a grayscale value of the baseline data, the G channel of the gain map data is combined with the grayscale value of the baseline data, and the B channel of the gain map data is combined with the grayscale value of the baseline data; or

when the color modes of the baseline data and the gain map data are both the grayscale mode, the channel combination information indicates that the grayscale value of the baseline data is combined with the grayscale value of the gain map data; or

when the color mode of the baseline data and the color mode of the gain map data are both any one of the YUV mode, the Lab mode, the HSV mode, the YCbCr mode, the ICtCp mode, and the grayscale mode, the channel combination information indicates that a luminance channel of the baseline data is combined with a luminance channel of the gain map data; or

when the color modes of the baseline data and the gain map data are both any one of the YUV mode, the Lab mode, the HSV mode, the YCbCr mode, and the ICtCp mode, the channel combination information indicates that the luminance channel of the baseline data is combined with the luminance channel of the gain map data; or

when the color mode of the baseline data is the grayscale mode, and the color mode of the gain map data is any one of the YUV mode, the Lab mode, the HSV mode, the YCbCr mode, and the ICtCp mode, the channel combination information indicates that the channel of the baseline data is combined with the luminance channel of the gain map data; or

when the color mode of the baseline data is any one of the YUV mode, the Lab mode, the HSV mode, the YCbCr mode, and the ICtCp mode, and the color mode of the gain map data is the grayscale mode, the channel combination information indicates that the luminance channel of the baseline data is combined with the channel of the gain map data.

14. The method according to claim 5 or 8, wherein the color mode conversion comprises:
converting a color mode of the baseline data, so that a converted color mode of the baseline data is the same as a color mode of the gain map data, or converting the color mode of the gain map data, so that a converted color mode of the gain map data is the same as the color mode of the baseline data.

15. The method according to any one of claims 1 to 3, wherein
when the conversion occurs after the second image is obtained, the conversion scheme information comprises:

color gamut conversion; or
chrominance format conversion; or
color compensation; or
color mode conversion.

16. The method according to claim 15, wherein the conversion scheme information further comprises a conversion parameter; and
the conversion parameter comprises:

a compensation matrix; or
a conversion matrix; or
a conversion function; or
a compensation value.

17. An encoding method, comprising:

determining baseline data of a first image, gain map data of the first image, and metadata of the first image based on the obtained first image, wherein the metadata carries conversion information; and
encoding the baseline data, the gain map data, and the metadata to obtain a bitstream.

18. The method according to claim 17, wherein the conversion information is conversion indication information, the conversion information comprises conversion location information and conversion scheme information, the conversion location information indicates a location at which a conversion scheme occurs, the conversion scheme information indicates the conversion scheme, the conversion occurs before or after a second image is obtained, and the second image indicates a new image synthesized based on the received bitstream.

19. The method according to claim 17 or 18, wherein
when the conversion occurs before the second image is obtained, the conversion information further comprises conversion object information, the conversion object information indicates a conversion object on which the conversion scheme needs to be performed, and the conversion object comprises:

the baseline data; or
the gain map data; or
the baseline data and the gain map data.

20. The method according to claim 19, wherein when the conversion object comprises the baseline data, the conversion scheme information comprises a baseline data conversion scheme, and the baseline data conversion scheme indicates to perform at least one of the following conversion on the baseline data:

color gamut conversion;
chrominance format conversion;
color compensation; or
color mode conversion.

21. The method according to claim 20, wherein the baseline data conversion scheme further indicates a conversion parameter used when the baseline data is converted.

22. The method according to claim 21, wherein the conversion parameter comprises:

a compensation matrix; or
a conversion matrix; or
a conversion function; or
a compensation value.

23. The method according to claim 19, wherein
when the conversion object comprises the gain map data, the conversion scheme information comprises a gain map data conversion scheme, and the gain map data conversion scheme indicates to perform at least one of the following conversion on the gain map data:

color mode conversion;
chrominance format conversion; or
channel conversion, wherein the channel conversion is used to restore a channel of the gain map data to an original channel.

24. The method according to claim 23, wherein the gain map data conversion scheme further indicates a conversion parameter used when the gain map data is converted.

25. The method according to claim 24, wherein the conversion parameter comprises:

a conversion matrix; or
a conversion function; or
a channel conversion function.

26. The method according to any one of claims 18 to 25, wherein the conversion information comprises channel combination information, and the channel combination information indicates a combination scheme of a channel corresponding to a color mode of the baseline data and a channel corresponding to a color mode of the gain map data.

27. The method according to claim 26, wherein

the color mode of at least one of the baseline data and the gain map data is a red green blue RGB mode or a grayscale mode; or

the color mode of the baseline data is an RGB mode, and the color mode of the gain map data is any one of a YUV mode, a Lab mode, an HSV mode, a YCbCr mode, an ICtCp mode, and a grayscale mode; or

the color mode of the baseline data is any one of a YUV mode, a Lab mode, an HSV mode, a YCbCr mode, an ICtCp mode, and a grayscale mode, and the color mode of the gain map data is an RGB mode; or

the color mode of the baseline data and the color mode of the gain map data are both any one of a YUV mode, a Lab mode, an HSV mode, a YCbCr mode, an ICtCp mode, and a grayscale mode.

28. The method according to claim 27, wherein

when the color modes of the baseline data and the gain map data are both the RGB mode, the channel combination information indicates that an R channel of the baseline data is combined with an R channel of the gain map data, a G channel of the baseline data is combined with a G channel of the gain map data, and a B channel of the baseline data is combined with a B channel of the gain map data; or

when the color mode of the baseline data is the RGB mode and the color mode of the gain map data is the grayscale mode, the channel combination information indicates that an R channel of the baseline data is combined with a grayscale value of the gain map data, a G channel of the baseline data is combined with the grayscale value of the gain map data, and a B channel of the baseline data is combined with the grayscale value of the gain map data; or

when the color mode of the baseline data is the grayscale mode and the color mode of the gain map data is the RGB mode, the channel combination information indicates that an R channel of the gain map data is combined with a grayscale value of the baseline data, a G channel of the gain map data is combined with the grayscale value of the baseline data, and a B channel of the gain map data is combined with the grayscale value of the baseline data; or

when the color modes of the baseline data and the gain map data are both the grayscale mode, the channel combination information indicates that a grayscale value of the baseline data is combined with a grayscale value of the gain map data; or

when the color mode of the baseline data and the color mode of the gain map data are both any one of the YUV mode, the Lab mode, the HSV mode, the YCbCr mode, the ICtCp mode, and the grayscale mode, the channel combination information indicates that a luminance channel of the baseline data is combined with a luminance channel of the gain map data; or

when the color modes of the baseline data and the gain map data are both any one of the YUV mode, the Lab mode, the HSV mode, the YCbCr mode, and the ICtCp mode, the channel combination information indicates that a luminance channel of the baseline data is combined with a luminance channel of the gain map data; or

when the color mode of the baseline data is the grayscale mode, and the color mode of the gain map data is any one of the YUV mode, the Lab mode, the HSV mode, the YCbCr mode, and the ICtCp mode, the channel combination information indicates that a channel of the baseline data is combined with a luminance channel of the gain map data; or

when the color mode of the baseline data is any one of the YUV mode, the Lab mode, the HSV mode, the YCbCr mode, and the ICtCp mode, and the color mode of the gain map data is the grayscale mode, the channel combination information indicates that a luminance channel of the baseline data is combined with the channel of the gain map data.

29. The method according to claim 20 or 23, wherein the color mode conversion comprises:
converting a color mode of the baseline data, so that a converted color mode of the baseline data is the same as a color mode of the gain map data, or converting the color mode of the gain map data, so that a converted color mode of the gain map data is the same as the color mode of the baseline data.

30. The method according to claim 17 or 18, wherein
when the conversion occurs after the second image is obtained, the conversion scheme information comprises:

color gamut conversion; or
chrominance format conversion; or
color compensation; or
color mode conversion.

31. The method according to claim 30, wherein the conversion scheme information further comprises a conversion parameter; and
the conversion parameter comprises:

a compensation matrix; or
a conversion matrix; or
a conversion function; or
a compensation value.

32. The method according to any one of claims 1 to 31, wherein the conversion information comprises at least one or more of the following:

color mode information of the baseline data of the first image;
color mode information of the gain map data of the first image; and/or
color mode information that is to be transformed and processed and that corresponds to the baseline data of the first image and the gain map data of the first image.

33. The method according to claim 32, wherein when an image color space model of the baseline data is a first color mode, a color space model used when the baseline data and the gain map data are combined for processing is a second color mode, and the first color mode is different from the second color mode, the color mode information to be transformed and processed comprises a color mode conversion manner.

34. The method according to claim 33, wherein
the first color mode and the second color mode are one of the following: RGB, YUV, YCbCr, Lab, HSV, and ICtCp.

35. The method according to any one of claims 1 to 34, wherein the conversion information comprises at least one or more of the following:

chrominance format information of the baseline data of the first image;
chrominance format information of the gain map data of the first image; and/or
chrominance format information that is to be transformed and processed and that corresponds to the baseline data of the first image and the gain map data of the first image.

36. The method according to claim 35, wherein when the chrominance format information of the baseline data of the first image is first chrominance format information, chrominance format information used when the baseline data and the gain map data are combined for processing is second chrominance format information, and the first chrominance format information is different from the second chrominance format information,
the chrominance format information that is to be transformed and processed comprises chrominance format conversion information.

37. The method according to claim 36, wherein
the first chrominance format information and the second chrominance format information are one of the following: RGB, grayscale, YUV4:4:4, YUV4:2:2, and YUV4:2:0.

38. The method according to any one of claims 1 to 37, wherein the first image and the second image are HDR or SDR images.

39. A chip, comprising a processor and a power supply circuit, wherein

the power supply circuit is configured to supply power to the processor; and
the processor is configured to perform the method according to any one of claims 1 to 16 or any one of claims 32 to 38; and/or the processor is configured to perform the method according to any one of claims 17 to 38.

40. A decoding apparatus, wherein the decoding apparatus comprises:

a processing module, configured to determine target data based on conversion information carried in metadata, wherein the metadata is metadata of a first image, and the target data comprises baseline data of the first image and/or gain map data of the first image; or the target data comprises a second image, wherein the second image is obtained based on the baseline data and the gain map data; and

a conversion module, configured to convert the target data based on the conversion information.

41. An encoding apparatus, wherein the encoding apparatus comprises:

a processing module, configured to determine baseline data of a first image, gain map data of the first image, and metadata of the first image based on the obtained first image, wherein the metadata carries conversion information; and
an encoding module, configured to encode the baseline data, the gain map data, and the metadata to obtain a bitstream.

42. A codec, comprising a memory and a processor, wherein the memory is configured to store computer instructions; when executing the computer instructions, the processor implements the method according to any one of claims 1 to 16 or any one of claims 32 to 38; and/or when executing the computer instructions, the processor implements the method according to any one of claims 17 to 38.

43. An encoding and decoding system, comprising an encoder and a decoder, wherein

the encoder is configured to: obtain baseline data, gain map data, and metadata carrying conversion information of a first image based on the first image, and encode the baseline data, the gain map data, and the metadata to obtain a bitstream of the first image, so as to implement the method according to any one of claims 17 to 38; and
the decoder is configured to determine and convert target data based on the conversion information carried in the metadata of the first image, to implement the method according to any one of claims 1 to 16 or any one of claims 32 to 38.

44. A computer-readable storage medium, wherein the storage medium stores a computer program or instructions, when the computer program or the instructions are executed by a processing device, the method according to any one of claims 1 to 16 or any one of claims 32 to 38 is implemented; and/or when the computer program or the instructions are executed by the processing device, the method according to any one of claims 17 to 38 is implemented.

45. A computer program product, comprising a computer program or instructions, wherein when the computer program or the instructions are executed by a processing device, the method according to any one of claims 1 to 16 or any one of claims 32 to 38 is implemented; and/or when the computer program or instructions are executed by the processing device, the method according to any one of claims 17 to 38 is implemented.

| Starlight | Moonlight | Indoor lighting | Cloudy outside | Sunny outside | Sunlight |
|-----------|-----------|-----------------|----------------|---------------|----------|

Dynamic range in the real world

$10^{-3}$     1     $10^2$     500     2000     $10^9$

Dynamic range visible to real human eyes

Visible dynamic range

Dynamic range supported by a display device

Dynamic range supported by the display device for display

FIG. 1

FIG. 2

FIG. 3

FIG. 4

FIG. 5

FIG. 6

FIG. 7

FIG. 8

FIG. 9

Encoding and decoding system 1000

FIG. 10

Content providing system 1100

```
                              ┌─────────────────────────────┐
                              │   Terminal device 1120       │
                              │  ┌───────────────────────┐   │
                              │  │  Smartphone/Tablet    │   │
                              │  │  computer 1121        │   │
                              │  └───────────────────────┘   │
                              │  ┌───────────────────────┐   │
                              │  │  Computer/Laptop      │   │
                              │  │  computer 1122        │   │
                              │  └───────────────────────┘   │
                              │  ┌───────────────────────┐   │
                              │  │  Network video recorder/ │
Communication                 │  │  Digital video recorder  │   Communication
link 1140                     │  │  1123                 │   │   link 1140
┌──────────┐                  │  └───────────────────────┘   │              ┌─────────┐
│Capturing │ ───────────────▶ │  ┌───────────────────────┐   │ ───────────▶ │ Display │
│device 1110│                 │  │  Television 1124      │   │              │ 1130    │
└──────────┘                  │  └───────────────────────┘   │              └─────────┘
                              │  ┌───────────────────────┐   │
                              │  │  Set-top box 1125     │   │
                              │  └───────────────────────┘   │
                              │  ┌───────────────────────┐   │
                              │  │  Video conference system │
                              │  │  1126                 │   │
                              │  └───────────────────────┘   │
                              │  ┌───────────────────────┐   │
                              │  │  Video surveillance system│
                              │  │  1127                 │   │
                              │  └───────────────────────┘   │
                              │  ┌───────────────────────┐   │
                              │  │  PDA 1128             │   │
                              │  └───────────────────────┘   │
                              │  ┌───────────────────────┐   │
                              │  │  Vehicle-mounted device  │
                              │  │  1129                 │   │
                              │  └───────────────────────┘   │
                              │            ...               │
                              └─────────────────────────────┘
```

FIG. 11

FIG. 12

Bitstream → Protocol processing unit 1210 → Stream file → Demultiplexing unit 1220

- Video elementary stream → Video decoder 1230 → Video frame → Synchronization unit 1260 → Video/Audio display 1270
- Audio elementary stream → Audio decoder 1240 → Audio frame → Synchronization unit 1260
- Subtitle → Subtitle decoder 1250 → Video/Audio/Subtitle display 1280

Electronic device

Decoding module | Processing module | Display module

Bitstream → Baseline data → Processed baseline data

Bitstream → Metadata

Bitstream → Gain map data

Processed baseline data → Target image → Display

FIG. 13A

FIG. 13B

FIG. 13C

FIG. 13D

FIG. 13E

FIG. 13F

FIG. 14

FIG. 15

FIG. 16

FIG. 17

FIG. 18

Processing module
1910

Encoding module 1920

Transceiver module
1930

Encoding apparatus 1900

FIG. 19

Encoding device 2000

Processor 2010

Communication
interface 2030

Bus 2040

Memory 2020

First image

Gain map data

Baseline data

Metadata

FIG. 20

| Transceiver module 2110 | Processing module 2120 |
|---|---|

| Conversion module 2130 | Decoding apparatus 2100 |
|---|---|

FIG. 21

| Processor 2210 | Communication interface 2230 |
|---|---|

Bus 2240

Memory 2220

First image

Metadata

Decoding device 2200

FIG. 22

## INTERNATIONAL SEARCH REPORT

| | International application No. |
|---|---|
| | **PCT/CN2024/100182** |

---

**A. CLASSIFICATION OF SUBJECT MATTER**

H04N 19/42(2014.01)i

According to International Patent Classification (IPC) or to both national classification and IPC

**B. FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, IEEE: 元数据, 转换, 基本层, 增强层, 色度, 矩阵, 模式, 合并, 通道, metadata, transform, base layer, enhancement layer, chroma, matrix, mode, merge, channel, RGB, YUV, HSV

**C. DOCUMENTS CONSIDERED TO BE RELEVANT**

| Category* | Citation of document, with indication, where appropriate, of the relevant passages | Relevant to claim No. |
|---|---|---|
| A | CN 112040240 A (SZ DJI TECHNOLOGY CO., LTD.) 04 December 2020 (2020-12-04) entire document | 1-45 |
| A | CN 115699745 A (HUAWEI TECHNOLOGIES CO., LTD.) 03 February 2023 (2023-02-03) entire document | 1-45 |
| A | CN 110915221 A (SONY CORP.) 24 March 2020 (2020-03-24) entire document | 1-45 |
| A | JP 2012517178 A (SAMSUNG ELECTRONICS CO., LTD.) 26 July 2012 (2012-07-26) entire document | 1-45 |
| A | US 2016360231 A1 (APPLE INC.) 08 December 2016 (2016-12-08) entire document | 1-45 |

☐ Further documents are listed in the continuation of Box C.    ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 September 2024** | **29 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/100182**

| Patent document cited in search report | | | Publication date (day/month/year) | Patent family member(s) | | | Publication date (day/month/year) |
|---|---|---|---|---|---|---|---|
| CN | 112040240 | A | 04 December 2020 | None | | | |
| CN | 115699745 | A | 03 February 2023 | None | | | |
| CN | 110915221 | A | 24 March 2020 | WO | 2019017362 | A1 | 24 January 2019 |
| | | | | US | 2020154143 | A1 | 14 May 2020 |
| | | | | US | 11245929 | B2 | 08 February 2022 |
| | | | | JPWO | 2019017362 | A1 | 28 May 2020 |
| | | | | JP | 7232183 | B2 | 02 March 2023 |
| | | | | KR | 20200028335 | A | 16 March 2020 |
| | | | | KR | 102538975 | B1 | 02 June 2023 |
| | | | | MX | 2020000449 | A | 13 July 2020 |
| | | | | CA | 3069106 | A1 | 24 January 2019 |
| | | | | US | 2022086500 | A1 | 17 March 2022 |
| | | | | US | 11736732 | B2 | 22 August 2023 |
| | | | | EP | 3657807 | A4 | 27 May 2020 |
| JP | 2012517178 | A | 26 July 2012 | US | 2010195900 | A1 | 05 August 2010 |
| | | | | US | 8798356 | B2 | 05 August 2014 |
| | | | | WO | 2010090462 | A2 | 12 August 2010 |
| | | | | WO | 2010090462 | A3 | 04 November 2010 |
| | | | | KR | 20100089705 | A | 12 August 2010 |
| | | | | EP | 2384580 | A2 | 09 November 2011 |
| | | | | EP | 2384580 | A4 | 05 September 2012 |
| US | 2016360231 | A1 | 08 December 2016 | US | 10812832 | B2 | 20 October 2020 |

Form PCT/ISA/210 (patent family annex) (July 2022)

**REFERENCES CITED IN THE DESCRIPTION**

**Patent documents cited in the description**

- CN 202311289650
- CN 202410139746